(19) Europäisches Patentamt
European Patent Office
Office européen des brevets

(11) EP 4 764 895 A1

(12) EUROPEAN PATENT APPLICATION

(43) Date of publication:
24.06.2026  Bulletin 2026/26

(21) Application number: 24220892.4

(22) Date of filing: 18.12.2024

(51) International Patent Classification (IPC):
G06F 16/901 (2019.01)    G06F 16/906 (2019.01)
G06N 3/00 (2023.01)

(52) Cooperative Patent Classification (CPC):
G06F 16/906; G06F 16/901; G06N 3/00;
G06N 3/044; G06N 3/045; G06N 3/08; G06N 3/084

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: ECOLE POLYTECHNIQUE FEDERALE
DE LAUSANNE
(EPFL)
1015 Lausanne (CH)

(72) Inventors:
• Fink, Olga
1110 Morges (CH)
• Sharma, Vinay
1020 Renens (CH)

(74) Representative: E. Blum & Co. AG
Franklinturm
Hofwiesenstrasse 349
8050 Zürich (CH)

(54) **DETERMINING PHYSICAL PROPERTIES OF A PHYSICAL SYSTEM THROUGH A GRAPH NEURAL NETWORK ENFORCING CONSERVATIONS OF PAIRWISE LINEAR AND ANGULAR MOMENTA**

(57)    The invention is notably directed to a computer-implemented method of determining one or more physical properties of a physical system ($10i$, $10f$, $10$) represented by a graph neural network (GNN). The physical system is a multi-body dynamical system of components interacting through pairwise interactions, such as a 3D granular system. The GNN includes nodes and bidirectional edges that are mapped onto the components and the pairwise interactions, respectively. The method comprises: (i) accessing an initial state obtained (S121) in accordance with initial dynamics of the physical system; (ii) iteratively executing (S125) the GNN based on the initial state accessed to iteratively update (S1256) a virtual state of the physical system as represented by the GNN, whereby multiple iterations are performed, which respectively correspond to multiple time steps; and (iii) determining (S126) one or more physical properties of the physical system at one or more of the multiple time steps based on one or more virtual states of the physical system as updated (S1256) at one or more of the corresponding iterations, respectively. At each iteration, the virtual state is updated (S1256) through message passing steps, which iteratively update (S1252, S1256) representations of the nodes and the bidirectional edges, so as to enforce (S1255), for each bidirectional edge of the bidirectional edges, a conservation of both a linear momentum and an angular momentum of the pairwise interaction corresponding to said each bidirectional edge. The angular momentum is measured about a point of action of internal force of the corresponding pairwise interaction. The invention is further directed to characterization systems and computer program products.

FIG. 12

**Description**

TECHNICAL FIELD

The invention relates in general to the field of computer-implemented methods of determining physical properties of a physical system represented by a graph neural network (GNN), as well as related methods, characterization systems, and computer program products. In particular, it is directed to methods of determining physical properties of a multi-body dynamical system of components interacting through pairwise interactions, such as a 3D granular system or a mechanical linkage, thanks to a GNN, whose nodes and bidirectional edges are mapped onto the components and the pairwise interactions, respectively. Such methods iteratively execute the GNN to evolve a virtual state of the physical system as represented by the GNN. At each iteration, the virtual state is updated through message passing steps that iteratively update representations of the nodes and the bidirectional edges, so as to enforce a pairwise (i.e., edge-wise) conservation of both the linear momentum and angular momentum, the latter measured about the point of action of internal force of the corresponding pairwise interaction.

BACKGROUND

Dynamical systems are fundamental to both natural and engineered environments, encompassing phenomena such as granular flows, molecular dynamics, and planetary motions in nature, as well as mechanical systems like bearings, gearboxes, and suspension systems.

Accurately modelling such systems is essential for predicting behaviours and informing design, optimization, and operational management decisions. In operational settings, reliable models are desired for learning from observational data, tracking state evolution in real-time, and inferring key physical quantities that influence system dynamics. Developing physics-grounded models with explicit parametric differential equations requires a deep understanding of the underlying mechanics and are challenging to scale for complex or large systems, especially when interactions lack known closed-form relationships or when some parameters are not observable or measurable. Furthermore, the high computational demands of simulating forward dynamics with these models hinder their practical application in real-time operational settings and often limit their use to research and development applications.

Consequently, there is a need for alternative approaches that can learn interpretable dynamical models directly from observed trajectory data or other measured data in real-world operational settings. Such approaches should ideally allow rapid forward inferences. Ideally, such approach should be interpretable, thereby providing, e.g., intermediate predictions of forces, moments, and inferred parameters like mass and moment of inertia. Such capabilities would be highly valuable in real-world operational settings, offering reliable support for decision-making for optimizing system design, operation, and maintenance.

Recent data-driven models that learn system dynamics from observed trajectory data have recently gained significant importance. However, as the present inventors concluded, such models primarily emulate trajectory evolutions without providing interpretability or ensuring the physical consistency of the learned dynamics. The lack of interpretability has a drawback, particularly in safety-critical engineering applications, where understanding the governing physical laws is essential for trustworthiness and robustness. Moreover, studies have demonstrated that these models often capture patterns corresponding to local minima, leading to substantial error accumulation in predicted dynamic rollouts and limiting their generalizability to input conditions that differ from the training data.

Addressing several of these challenges, Physics-Informed Neural Networks (PINNs) have been developed, that integrate partial differential equations (PDEs) governing dynamical systems into the learning framework as additional loss terms in the objective function. This integration enhances prediction accuracy over extended rollouts and improves adaptability across varying input conditions. However, deriving the governing PDEs for complex multi-body dynamical systems with complex interactions, such as collisions and contact forces, poses significant challenges, often requiring substantial customization and specialized domain expertise. This reliance on pre-defined PDEs limits the scalability of PINNs, especially when system dynamics are only partially understood or are influenced by uncertain external factors. Furthermore, PINNs are often specific to a given system, which restricts their adaptability to different configurations, especially in scenarios where system complexity increases by incorporating more interacting components.

In contrast, Graph Neural Networks (GNNs) provide a flexible and scalable approach to modelling dynamic systems by representing components as nodes and their interactions as edges. By learning pairwise interactions, GNNs establish a modular framework that can adapt to changing configurations, provided that the nature of the interactions remains consistent. Nevertheless, like other data-driven methods, GNNs often fail to capture the underlying physics, leading to error accumulation during extended rollouts and poor generalization to novel conditions. Additionally, these methods lack interpretability, reducing their applicability and reliability in real-world applications.

Addressing these limitations, recent advancements have integrated physics-based inductive biases into GNNs, particularly through geometry-informed models that incorporate 3D rotational and/or translational symmetries prevalent in physical systems. These symmetries are represented by the special orthogonal group SO(3) and the translational group T(3), which encompass all rotations and all translations in the Euclidean group, respectively. Such symmetries ensure that predictions of dynamical systems remain equivariant to rotations and invariant to translations. For instance, under an SO(3) transformation, a rotation should appropriately rotate the predicted forces (rotation equivariance), while a T(3)-translation should leave the predicted forces unchanged (translational invariance).

These methods enforce invariant or equivariant transformations on the outputs, either within the original 3D space (see, e.g., EGNN, Clofnet) or in higher-order spaces (see, e.g., TFN, SE(3)-Transformers), although higher-order spaces often add additional computational costs. For instance, EGNN operates directly in 3D by projecting input features onto the edge-distance vector to achieve symmetrical transformations. In contrast, Clofnet extends this approach by employing an edge-wise local SO-(3) equivariant reference frame instead of a purely radial one, thereby capturing more complex symmetrical interactions.

Although symmetry-based inductive biases improve GNNs for dynamic system predictions, the present inventors concluded that they often fail to sufficiently capture the complexity of the physics of multi-dynamical body systems. Therefore, the inventors set themselves the challenge of developing methods that are more robust, in terms of physics, to arrive at models that more faithfully predict the evolution of multi-body dynamical systems over time, while remaining scalable and transferable, at least partly.

SUMMARY

As noted above, the present inventors observed that graph neural networks (GNNs) based on symmetry-based inductive biases often fail to sufficiently capture the physics of multi-body systems. On reason is that they do not integrate fundamental principles such as the conservation of both the linear momentum and the angular momentum. Accordingly, the inventors managed to devise solutions that make it possible to enforce the conservation of both momenta, albeit in a pairwise manner. This way, linear momentum conservation is ensured for the whole system, while angular momentum conservation is propagated system-wide by message passing operations. As a result, their approach is not only more robust, in terms of physics, but it further remains easily scalable and also transferable from one physical system to another, at least partly.

In more detail, a first aspect of the invention concerns a computer-implemented method of determining one or more physical properties of a physical system represented by a GNN. The underlying physical system is a multi-body dynamical system of components interacting through pairwise interactions. The dynamical system can for instance be a 3D granular system, or a molecular system (e.g., a molecular cluster), a planetary system, or a mechanical system, such as a linkage mechanism, or any system involving bearings, gearboxes, or a suspension system. In all cases, the GNN includes nodes and bidirectional edges that are mapped onto the components and the pairwise interactions, respectively.

The method first comprises accessing an initial state, which is a state obtained in accordance with initial dynamics of the physical system. The method then revolves around iteratively executing the GNN based on the initial state accessed, so as to evolve (i.e., iteratively update) a virtual state of the physical system. This state is called "virtual," to the extent that it reflects the state of the physical system as represented by the GNN. Multiple iterations are performed, which respectively correspond to multiple time steps. In addition, the method further determines one or more physical properties of the physical system at one or more of the multiple time steps (if possible, at each time step, computational requirements permitting). Such properties may for instance include the internal (unobserved) load or internal forces. They are determined based on one or more virtual states of the physical system as updated at one or more of the corresponding iterations, respectively.

The present approach benefits from a specific technical implementation. Namely, at each iteration of the multiple iterations evoked above, the virtual state of the system is updated through message passing steps, which, in the present context, are adapted to enforce the conservation of both the linear momentum and the angular momentum, albeit in a pairwise fashion. That is, the message passing steps iteratively update representations of the nodes and the bidirectional edges, in a manner that enforces, for each bidirectional edge of the bidirectional edges, the conservation of both the linear momentum and the angular momentum of the pairwise interaction corresponding to said each bidirectional edge. I.e., each bidirectional edge has two directions and therefore involves two single directional edges. However, momenta are conserved by considering the two directions of each bidirectional edge.

Importantly, however, the angular momentum is measured about a point of action of internal force of the corresponding pairwise interaction. And this is precisely a remarkable contribution of the present invention: the angular momentum conservation can be enforced through an edge-wise approach, provided that angular momenta are measured about the point of action of internal force of the respective pairwise interactions. As one understands, enforcing a pairwise conservation results in that the conservation of the angular momentum can be enforced by the message passing operations, in addition to the conservation of the linear momentum.

Another fortunate consequence of the proposed edge-wise approach is that it remains easily scalable (whether up or down). That is, knowledge learned at the level of nodes and edges can fairly well be transferred across physical systems of different sizes and with different boundary conditions. Moreover, enforcing pairwise conservations of both the linear and angular momenta as described above gives rise to more realistic property predictions, which remain faithful to the reality for a longer period of time, thanks to stable error accumulations.

The proposed approach can therefore be used with confidence to simulate a physical system, monitor this system, be used as a virtual sensor, and/or serve as a digital twin, for example.

Interestingly, the present approach can not only advance property predictions but, in addition, it offers a framework that is interpretable and adaptable to a variety of dynamical systems, because it is possible to decode the representations of the nodes and edges, at each intermediate message passing step. This flexibility allows for a broad applicability across fields such as robotics, aerospace engineering, biomechanics, and environmental modelling, especially where interpretable outputs support the decision making.

Interestingly, the edge-wise implementation of the present approach can be broken down to directional edges, as in preferred embodiments. That is, the message passing steps are advantageously performed to iteratively update the representations of nodes and edges in parallel for all directional edges of the bidirectional edges. Since each bidirectional edge involves two opposite directional edges, this makes it possible for the message passing steps to enforce the conservation of both the linear momentum and the angular momentum for each bidirectional edge, while parallelizing all operations related to directional edges. This results in a fast and efficient implementation of sub-iterations related to message passing operations.

In embodiments, the one or more physical properties include at least one mechanical property of one or more (preferably all) of the components of the physical system, and/or trajectories of at least a subset of the components of the physical system. That is variety of properties in all trajectories can be determined based on the updated states of the underlying physical system. In principle, the latter can be a real system operating in the real world. However, different scenarios can be contemplated, as discussed below.

Several application scenarios can be contemplated. For example, the physical system and the GNN may be jointly running from the start. In that case, the GNN can be used to continually monitor the physical system, based on measurements thereof. Alternatively, the physical system may only be operated in the real world after having performed the method, in accordance with outputs from the method. In that case, the physical system may initially be simulated, so as to obtain an initial state thereof, based on which the GNN may be executed iteratively, as described above. Another scenario in one in which the physical system is a system that already operates in the real world before starting to execute the GNN, as in preferred embodiments. In that case, the method further comprises performing one or more initial measurements of the physical system, prior to accessing the initial state. The method then determines the initial state based on dynamics obtained from the one or more initial measurements performed.

This allows the GNN to be anchored to the physical system while the latter is already operating in the real world. In turn, the present methods can be used to monitor the physical system, possibly for virtual sensing purposes. Note, the GNN may be re-aligned with the physical system, if necessary, by performing new measurements, in order to obtain a new initial state and then re-start iterating the GNN based on this new initial state. Incidentally, such a re-alignment process may be exploited to-retrain another instance of the GNN in parallel, whereby the re-trained GNN may later be used to compute the properties of the physical system.

In particularly preferred embodiments, the present methods are implemented for virtual sensing purposes. That is, at least one property of the one or more physical properties (as determined at one or more of the multiple time steps) differs, in its type, from a type of any property as measured by performing the initial measurements. Thus, determining said at least one property amounts to performing virtual sensing, something that can be useful and cost-effective as some properties can be very difficult, if not impossible, to characterize in real-time for certain dynamical systems. For example, stress loads and deformations can be determined from mere trajectories observed for a multi-body dynamical system without being explicitly measured.

The present method may otherwise aim at monitoring the physical system as it operates in the real world, whether in real-time or in a predictive manner. For instance, in embodiments, said one or more physical properties are determined at several steps of the multiple time steps, preferably at each of the multiple time steps. The method further comprises monitoring the one or more physical properties as determined at the several steps against one or more criteria, such as threshold values of loads or deformations.

Note, the latest iterations (corresponding to most recent time steps) performed by the method may correspond to time steps that anticipate a future of the physical system (which currently operates in the real world). In that case, the one or more physical properties determined can be predictively monitored. In other words, the method can also perform predictions, which can be monitored, e.g., to potentially anticipate anomalies or malfunctions of the underlying physical system.

The present methods may thus support a decision to act on the physical system. Such a decision may possibly be made fully automatically, e.g., by exploiting interpretable intermediate results, as in preferred embodiments. Alternatively, this decision may involve human intervention. In practice, acting on the system can for example result in stopping it, restarting it, or changing its operation (in the real world). More generally, the present methods may comprise taking action with respect to the physical system as the latter operates in the real word, based on the one or more properties monitored, to change a way the physical system currently operates in the real world, as in embodiments.

In particular, the present methods can predictively test different hypotheses, scenarios, or ways of operating the system. For example, in embodiments, different instances of the GNN are iteratively executed based on distinct initial states, the latter obtained in accordance with different initial dynamics of the physical system, so as to determine the one or more physical properties for each of multiple evolutive scenarios of the physical system. Interestingly, the different instances of the GNN may advantageously be executed in parallel, in the interest of time efficiency.

In embodiments, the representations of the nodes and the directional edges of the bidirectional edges are obtained by projecting vector properties of the nodes and directional edges of the bidirectional edges onto edge-aligned (and therefore edge-local) reference frames. The edge-aligned reference frames preferably include frames that are precomputed as special orthogonal group SO(3)-equivariant, translational T(3)-invariant, and permutation-equivariant, reference frames (hereafter referred to as SOTPE reference frames). As a result, said representations are obtained as special orthogonal group SO(3)-invariant, translational T(3)-invariant, and permutation-invariant, embeddings (hereafter referred to as SOTPI embeddings). The resulting permutation-invariant embeddings make it possible to encode pairwise interactions most effectively as they capture magnitudes of interactions which are invariant under all Euclidean transformations. Such representations ensure physically consistent predictions of interactions on edges and additionally facilitate the interpretation of intermediate outputs.

A practical implementation scheme is the following. In embodiments, each iteration comprises, for each directional edge of each bidirectional edge:

(i) Encoding vector properties (i.e., typically dynamic properties) of the directional edge of the bidirectional edges and the two corresponding nodes to form latent embeddings;
(ii) Obtaining edge interaction embeddings from the latent embeddings. This, in practice, can be achieved by means of several transformations, thanks to several learned functions, as in embodiments discussed below;
(iii) Updating, thanks to a learned function, the edge interaction embeddings based on previous edge interaction embeddings as obtained at one or more preceding ones of the iterations;
(iv) Decoding dynamics of said two corresponding nodes from the updated edge interaction embeddings so as to enforce the conservation of the linear momentum and the angular momentum, and
(v) Updating states of the two corresponding nodes from the decoded dynamics, whereby a virtual state of the system as represented by the GNN is eventually obtained based on states as updated for all of the nodes of the GNN.

In embodiments, said properties are encoded by notably projecting the vector properties of the nodes onto the edge-aligned reference frames evoked above, i.e., the SOTPE reference frames. These operations are performed for each directional edge of each bidirectional edge. That is, the basis vectors of the reference frames are anti-parallel along any bidirectional edge. Such basis vectors depends on the state vectors of the connected nodes; at least one basis vector is aligned along the direction of that edge. In addition, the vector properties of each directional edge are projected onto the same edge-aligned reference frame, whereby second scalars are obtained. Again, this operation is performed for each directional edge of each bidirectional edge.

Eventually, the latent embeddings are obtained by applying learned functions to the first and second scalars. For example, the first scalars can be transformed by a first learned function to obtain first embeddings, while the second scalars can be transformed by a second learned function to obtain second embeddings. Finally, a further learned function can be applied to the first and second embeddings to obtain the latent embeddings. Such a feature encoding scheme is fairly simple and suitably incorporate the physics of the problem, while remaining interpretable, it being noted that the resulting embeddings are decoded, e.g., as internal forces and rotational moments, at each step.

In embodiments, decoding said dynamics further comprises, for said each directional edge, aggregating internal forces and rotational moments at each of the two corresponding nodes, and decoding velocity changes and angular velocity changes. Such changes are due to internal forces. The states of the nodes are preferably updated by performing a single step Euler integration.

In embodiments, the method further comprises, prior to accessing the initial state and iteratively executing the GNN, training functions involved in the GNN by introducing inductive biases in the architecture of the GNN for it to learn to enforce, for any bidirectional edge thereof, a conservation of both the linear momentum and the angular momentum upon decoding dynamics of the two nodes corresponding to said any bidirectional edge. So, the GNN as used at runtime is one that has been trained based on inductive biases, thanks to which the message passing steps performed at runtime can enforce the conservation of both momenta. In addition, use can be made of a forward time integration bias, as in embodiments discussed later.

According to another aspect, the invention is embodied as a characterization system. The characterization system comprises processing means configured to perform steps of a method according to any of the embodiments as described above. In addition, the characterization system may comprise: (i) the underlying physical system, (ii) characterization means, which are interfaced with the processing means; and/or (iii) a transducer configured to influence the physical system. The transducer can be interfaced with the processing means, whereby the transducer is adapted to take action with respect to the physical system.

According to a final aspect, the invention is embodied as a computer program product comprising a computer readable storage medium having program instructions embodied therewith. The program instructions are executable by processing means of a computerized system to cause the latter to perform steps of a method according to any of the embodiments described earlier.

BRIEF DESCRIPTION OF THE DRAWINGS

These and other objects, features and advantages of the present invention will become apparent from the following detailed description of illustrative embodiments thereof, which is to be read in connection with the accompanying drawings. The illustrations are for clarity in facilitating one skilled in the art in understanding the invention in conjunction with the detailed description. In the drawings:

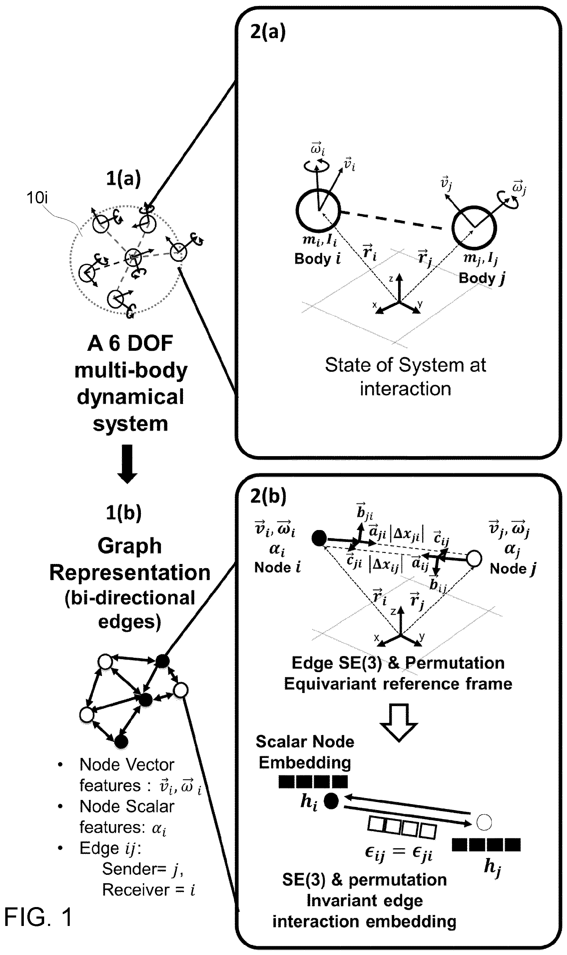

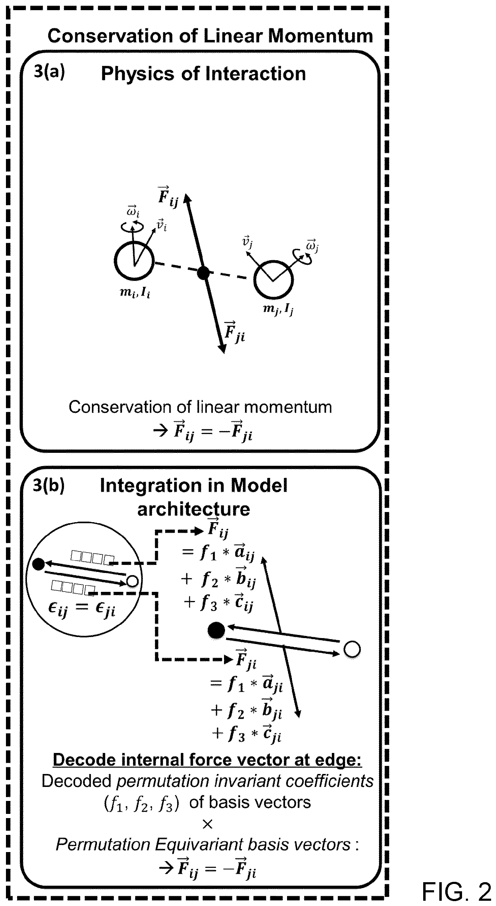

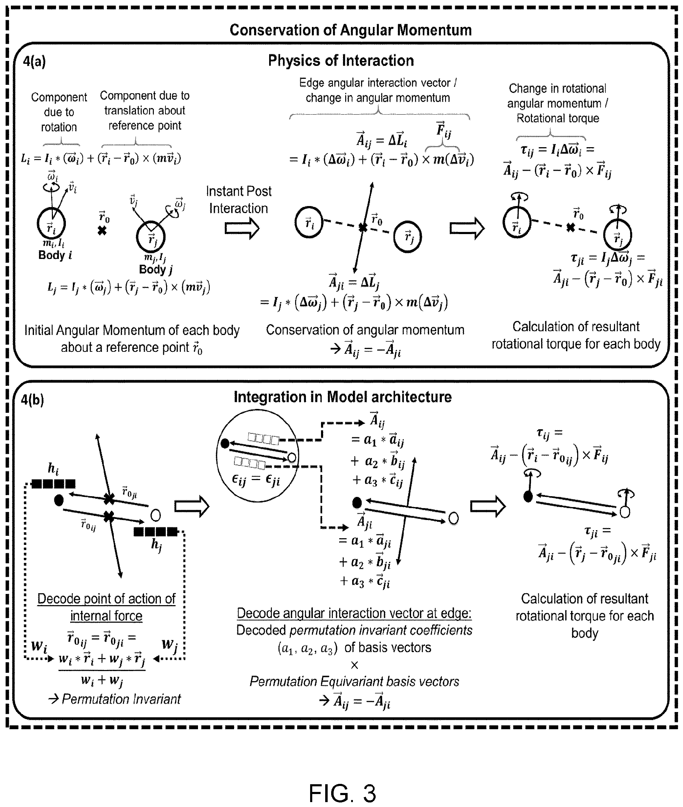

FIGS. 1 to 3 schematically illustrate how the conservation of linear and angular momenta for interacting bodies is achieved, thanks to corresponding inductive biases, in a multi-body dynamical system having six degrees of freedom (DOF), as in embodiments. The figures show different panels, i.e., panels 1(a) to 4(b), In detail:

- Panels 1(a) and 1(b) show a 6-DOF multi-body dynamical system (Panel 1a) and its graph representation with bidirectional edges (Panel 1b);
- Panel 2(a) shows two interacting bodies, $i$ and $j$, with state vectors, e.g., velocity $\vec{v}_{ij}$, angular velocity $\vec{\omega}_{ij}$, and scalar properties $\vec{\alpha}_{ij}$;
- Panel 2(b) shows a special Euclidian group SO(3)-equivariant, translational T(3)-invariant and permutation-equivariant reference frame calculated for each edge, enabling SO(3), T(3) and permutation-invariant embeddings for the projected node vector features and scalar features;
- Panels 3(a) and 4(a) illustrate the physics involved in the conservation of linear (3a) and angular momentum (4a) for the two interacting bodies $i$ and $j$, while panels 3(b) and 4(b) show how the conservation principles can be incorporated in a graph neural network (GNN) for linear (3b) and angular momentum (4b);
- In panel 3(a), the conservation of linear momentum implies $\vec{F}_{ij} = -\vec{F}_{ji}$. In panel 3(b), the embeddings are decoded as coefficients of the basis vectors of the reference frame, leading to force vectors that are equal and opposite ($\vec{F}_{ij} = -\vec{F}_{ji}$);
- In panel 4(a), the angular momentum of the two-body system is conserved about a reference point $\vec{r}_0$, resulting in equal and opposite changes in each body's angular momentum via the angular interaction vector $\vec{A}_{ij}$; and
- In panel 4(b), each edge is treated as an isolated system with the internal force's point of action (derived from scalar node embeddings) as the reference point. Equal and opposite angular interaction vectors ($\vec{A}_{ij} = -\vec{A}_{ji}$) are decoded from edge embeddings to calculate the resultant rotational torque on each body.

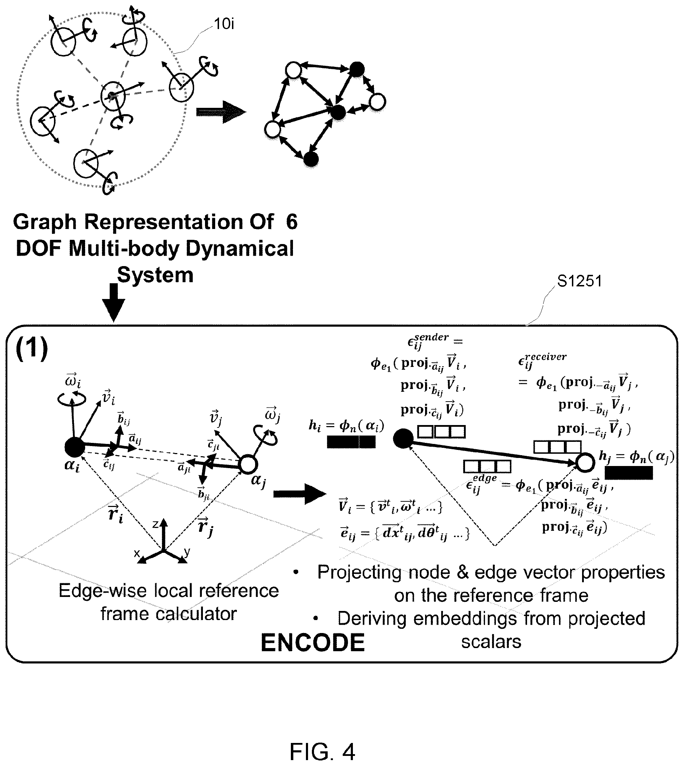

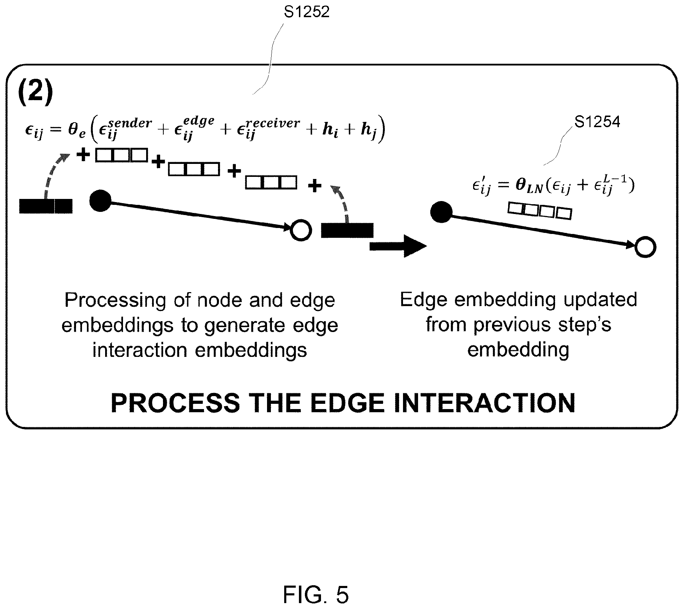

FIGS. 4 to 7 schematically illustrate a pipeline for a GNN framework according to embodiments, the architecture of which involves steps of encoding, processing, decoding, and updating information, for each edge and the corresponding nodes. The figures show different panels, i.e., panels 1 to 4. In detail:

- Panel 1 illustrates a step of encoding properties of each edge and two corresponding nodes to form latent embeddings by projecting properties of the two nodes and the edge onto edge-local reference frames, which are constrained to be SO(3)-equivariant, T(3)-invariant and permutation-equivariant reference frames;
- Panel 2 illustrates a step of obtaining edge interaction embeddings from the latent embeddings. As per the projection used, the edge interaction embeddings end up being SO(3), T(3) and permutation-invariant embeddings. The panel also shows how the edge interaction embeddings are updated based on previous edge interaction embeddings as obtained at one or more preceding ones of the iterations;
- Panel 3 illustrates a step of decoding dynamics of the two nodes. The step enforces the conservation of the linear momentum and the angular momentum, as a result of inductive biases applied upon training the GNN; and
- Panel 4 illustrates a step of updating states of the two nodes from the decoded dynamics. As shown at the bottom, a virtual state of the physical system (as represented by the GNN) is eventually obtained thanks to message passing steps, based on the states as updated for all of the nodes and edges of the GNN.

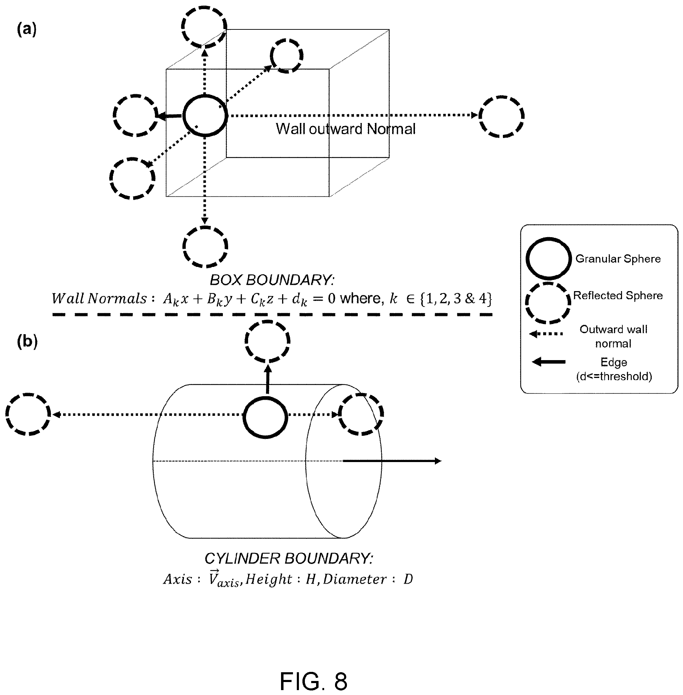

FIG. 8 schematically illustrates a modelling of wall boundaries, which is free of any mesh and particle, as in embodiments.

- Panel (a) illustrates the normal contact and collision modelling of a granular sphere with the walls of a box boundary. The sphere is reflected along the outward normal vector of each wall. Of the six possible reflections, only those that satisfy a predefined threshold distance form an edge with the reflected sphere; and
- Panel (b) demonstrates the contact modelling for a cylindrical boundary, which is parameterized by its diameter, height, and axis vector. The spheres are reflected off both the curved surface and the planar end caps, effectively handling interactions with the cylindrical geometry.

FIG. 9 illustrates the detailed calculation of a permutation equivariant reference frame for bidirectional edges, as involved in embodiments.

FIG. 10 shows selected components of a characterization system including a mechanical linkage mechanism (a pumpjack), and a computer interfaced with characterization means and a transducer for proactively taking action with respect to a prime mover of the pumpjack, should a prediction be made of an anomaly, a malfunction, or a deviation from an expected behaviour, as in embodiments.

FIG. 11 schematically represents a general-purpose computerized system, suited for implementing one or more method steps as involved in embodiments of the invention.

FIG. 12 is a flowchart illustrating high-level steps of a method of determining physical properties of a physical system represented by a GNN, as in embodiments.

The accompanying drawings show simplified representations of devices or parts thereof, as involved in embodiments. Technical features depicted in the drawings are not necessarily to scale. Similar or functionally similar elements in the figures have been allocated the same numeral references, unless otherwise indicated.

Computerized systems, methods, and computer program products embodying the present invention will now be described, by way of non-limiting examples.

DETAILED DESCRIPTION OF EMBODIMENTS OF THE INVENTION

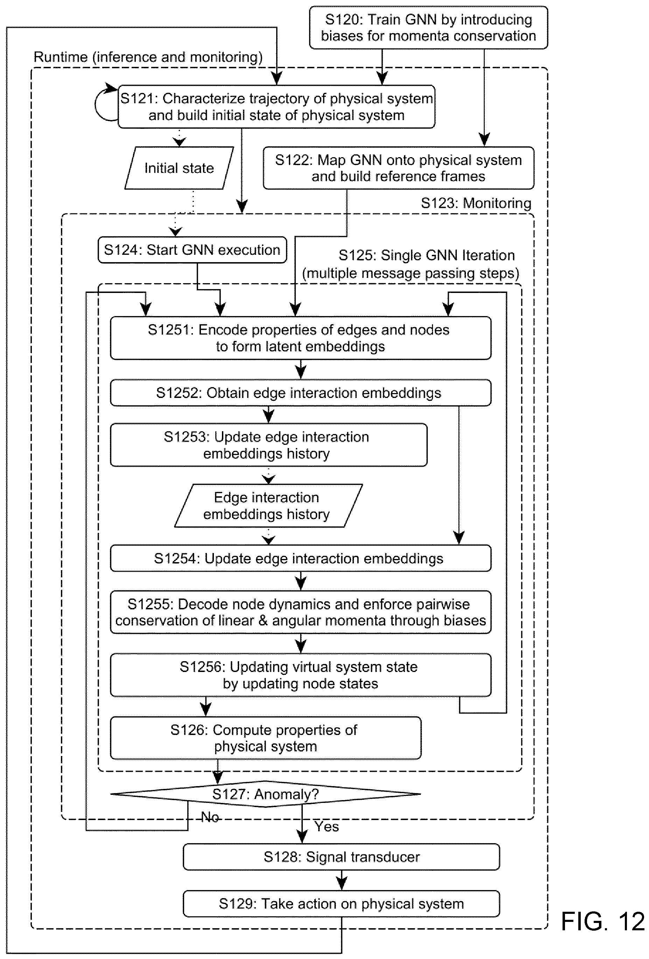

The following description is structured as follows. General embodiments and high-level variants are described in Section 1. Section 2 addresses particularly preferred embodiments. Section 3 concerns technical implementation details. Note, the present method and its variants are sometimes collectively referred to as the "present methods." All references Sn refer to methods steps of the flowcharts of FIG. 12, while numeral references pertain to devices, components, and concepts involved in embodiments of the present invention.

**1. General embodiments and high-level variants**

This section discusses the main aspects of the invention (Sections 1.1 and 1.5), as well as preferred applications (Section 1.2), preferred implementations (Section 1.2), and the training (Section 1.4) of the GNN framework.

**1.1. Methods of determining physical properties of a multi-body dynamical system (first aspect of the invention)**

**1.1.1. Overview**

Referring to FIGS. 4 - 7, and 12, a first aspect of the invention concerns a computer-implemented method of determining one or more physical properties of a physical system, which is a multi-body dynamical system of components interacting through pairwise interactions.

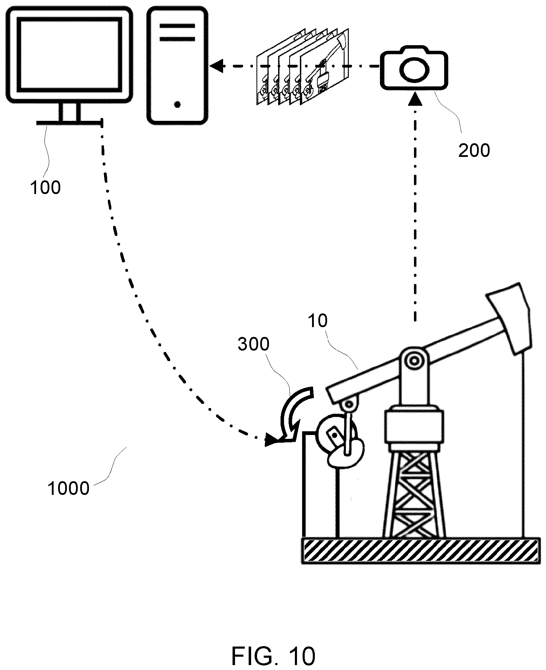

The underlying physical system may for example be a 3D granular system, as assumed in FIG. 8. In variants, the system can be a system 10 of interlinked parts (i.e., a mechanical linkage), as assumed in FIG. 10. Other dynamical systems can be contemplated, which will typically be complex dynamical systems, the interdependent parts of which evolve nonlinearly over time. For example, it can be a suspension system of a vehicle's wheel or a mechanical watch or clock.

The pairwise interactions will typically include contact, gravitational attraction, and/or friction interactions. In principle, however, the pairwise interactions may include one or more of the following: non-linear sliding frictions, tangential and normal contact deformation forces, nonlinear tangential and normal damping forces, electrostatic coulomb forces. Depending on the physics of the problem at hand, such interactions may possibly be combined. For example, in a 3D granular system, the following forces are involved at any given time: (i) normal contact force, (ii) sliding contact forces, (iii) sliding frictional forces, (iv) normal and tangential damping forces, and (v) external gravitational forces. In the present context, all such interactions are assumed to adhere to Newton's third law: for every action (force) in nature there is an equal and opposite reaction.

According to the present approach, the underlying physical system is represented by a graph neural network (GNN). To that aim, the GNN includes nodes and bidirectional edges, which are mapped onto the components of the physical system and the pairwise interactions between such components, respectively. That is, nodes represent respective components, while the edges reflect the pairwise interactions. The physical system is represented by the nodes and edges of the GNN, as well as information attached to the nodes and edges.

The proposed method basically revolves around iteratively executing the GNN to update a virtual state of the physical system. In detail, the method first comprises a step of accessing an initial state of the physical system, where this initial state is one that was obtained in accordance with initial dynamics of the physical system, see step S121 in the flow of FIG. 12. Next, the GNN can be iteratively executed (step S125) based on the initial state accessed, with a view to iteratively updating S1256 the virtual state of the physical system as represented by the GNN. This means that multiple iterations are performed, which respectively correspond to multiple time steps. In the present context, such time steps can be aligned with Newtonian dynamics of the system.

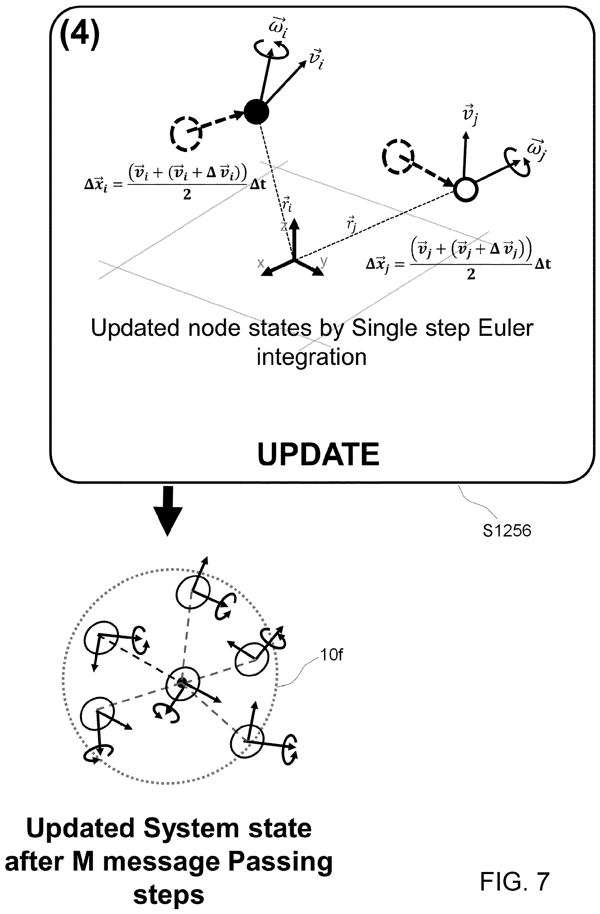

Eventually, the method determines S126 one or more physical properties of the physical system. Such properties are determined at one or more of the multiple time steps, preferably at each time steps, the computational requirements permitting. These properties are determined based on one or more virtual states of the physical system, as updated S1256 at one or more of the corresponding iterations, respectively. That is, at each iteration where properties of the physical system are to be determined, these properties are determined based on the virtual state of the physical system as updated during that same iteration. However, some physical properties may need to be computed by further taking into account the virtual states of the system as obtained during one or more previous iterations. Note, the physical system states are called "virtual" insofar as they reflect the states of the system as represented by the GNN. For example, FIGS. 1 and 4 show a physical system 10*i* (as represented by the GNN) in an initial state, while FIG. 7 shows the physical system 10*f* (again, as represented by the GNN) in an updated state.

Importantly, at each iteration, the virtual state of the physical system is updated S1256 through message passing steps. The message passing steps iteratively update S1252, S1256 the representations (e.g., embeddings) of the nodes and the bidirectional edges. In practice, such representations are preferably obtained for each directional edges of each bidirectional edge, for reasons that will become apparent later. By construction, the message passing steps enforce S1255 a conservation of both the linear momentum and the angular momentum of the pairwise interaction corresponding to each bidirectional edge. For completeness, the angular momentum is measured about a point of action of internal force of this pairwise interaction.

### 1.1.2. Comments and definitions

Comments are in order. First, a distinction should be made between an actual physical system, which has an existence of its own, and the physical system as represented by the GNN (sometimes referred to as the represented system herein). The physical system as represented by the GNN is represented by nodes and edges of the GNN, as well as information attached to the nodes and edges, where the nodes and edges are respectively mapped onto the components of the physical system and the pairwise interactions. The physical system may already be defined and operating in the real world, even before starting to execute the GNN. Alternatively, the physical system may be simulated by the GNN, e.g., before being eventually built in accordance with observations made with the GNN. In the latter case, the initial state or states of the physical system can be simulated.

The initial state is obtained S121 from the initial dynamics observed (i.e., measured or simulated) for the physical system. This initial state may for example be obtained by determining an initial configuration (e.g., positions and velocities of components or parts) of the physical system. It may also be obtained by measuring initial properties or an initial trajectory of the system or components thereof.

The above method concerns steps performed at runtime, i.e., for inferencing purposes. That is, the GNN is assumed to have already been trained, step S120, whereby the GNN as used for execution at runtime is assumed to have already learned how to achieve suitable representations of the nodes and edges and evolve such representations. At runtime, the GNN is iteratively executed, starting from some initial state(s) of the system. Several initial states may possibly be taken into account, initially, to align the GNN with the physical system. If necessary, one may repeatedly re-align the GNN with the physical system by repeatedly accessing states obtained S121 in accordance with dynamics of the physical system and re-triggering S124 execution of the GNN based on the states accessed. Incidentally, such re-alignment steps may be used to retrain the GNN in the background, as noted in the Summary.

In the present context, multiple iterations are performed. The iterative execution of the GNN causes the virtual state of the represented system to be iteratively updated at each iteration. In other words, each iteration leads to an updated state of the represented system, which updated state is used as input for the next iteration. Now, the virtual state of the physical system as obtained at the end of an iteration (or at least some of the iterations) is used to determine properties of the physical system. If necessary, the virtual state of the physical system as obtained during one or more of the previous iterations may be used to compute one or more of these properties. The reason is that certain properties (such as pair-wise shearing contact forces and frictional forces) require knowledge of two or more successive states of the system. Besides, certain applications may require the determination of several properties. In other cases, determining a single property may be sufficient. To summarize, according to the present methods, one or more physical properties are determined at one or more of the time steps, based on one or more virtual states of the system as updated throughout one or more of the corresponding iterations. The determined properties will typically be quantifiable; they accordingly correspond to physical quantities. Such properties are eventually outputted by the underlying computerized system, whether at each time step or not (e.g., *en bloc* in the end). These properties may for instance be determined with a view to taking action on the physical system, if necessary, as assumed in FIG. 10.

Moreover, each iteration involves multiple message passing steps, whereby nodes can update their representations. In the present context, such message passing steps are also used to update representation of the edges, where the edge representations typically encode the dynamics of the physical system. The message passing steps are an iterative process of its own, taking place within each iteration. Thus, the present methods involve nested iterations, where the message passing steps can be regarded as sub-iterations. Preferably, between 5 and 20 (e.g., 10) sub-iterations are performed within each iteration. So, for example, if one iteration corresponds to 1 second, then 10 sub-iterations can be performed, which correspond to 0.1 seconds each. Yet, sub-iterations will advantageously be parallelized over all directional edges. That is, the message passing steps are preferably executed in parallel for all directional edges of all bidirectional edges, to enable an efficient implementation, as discussed in detail in Section 1.3. At the end of each sub-iteration (each sub-iteration corresponding to one cycle of message passing step), the system state is fed back into the GNN, so as to iteratively evolve the system state. Similarly, at the end of each iteration, the system state is fed back into the GNN, so as to start a new iteration.

Remarkably, at each iteration, the message passing steps further enforce pairwise linear and angular momenta conservation, hence an edge-wise conservation of the momenta. This, in practice, can be achieved thanks to inductive biases, which are incorporated into the learning architecture of the GNN, as discussed later in detail. This edge-wise conservation amounts to considering edges as isolated dynamical systems. More precisely, each edge can be treated as an independent dynamical subsystem, along with its connected sender and receiver nodes. I.e., each directional edge within each bidirectional edge receives information from a sender node and sends information to a receiver node. So, the two nodes of each bidirectional edge can be both sender and receiver nodes.

The present approach is designed so that momenta will be conserved for any pair of bodies, which interact through bidirectional edges. Momentum is conserved for two bodies: since any two bodies of the physical system interact through bidirectional edges, the momentum will be conserved for each bidirectional edges. Therefore, in the present context, momenta are conserved on each bidirectional edge.

By construction, the GNN is a physics-informed neural network. However, the present GNN framework should not be confused with PINNs, which rely on a different learning paradigm and enforce partial differential equations as constraints, as discussed in the background.

### 1.1.3. Advantages of the proposed solution

Contrary to prior methods, the present approach enforces the conservation of both the linear and angular momenta, whereas prior methods at most enforce a conservation of linear momenta. There is currently no scalable solution that enforce a conservation of the angular momentum, something that is believed to be challenging. Now, a remarkable contribution of the present inventors is that they have realized that the angular momentum conservation could be enforced through an edge-wise approach, provided that angular momenta are measured about the point of action of internal force of the respective pairwise interactions. As a result, the conservation of the angular momentum can be enforced by the message passing operations, much like the conservation of the linear momentum, e.g., thanks to inductive biases used during the training.

A very fortunate consequence of the present edge-wise approach is that it remains easily scalable (whether up or down), notwithstanding the angular momenta conservation. Here the message passing steps iteratively update representations of the nodes and edges, where such representations can be learned during a training phase in a manner that is independent of the size of the problem and thus the GNN. As a result, the learned functions, which are used to obtain the required representations, can be used for any node and edge, in a scalable fashion. Moreover, the GNN can learn to decode such representations, once updated, in a manner that ensures the momenta conservation, thanks to inductive biases applied upon training the GNN. Thus, knowledge learned at the node and edge level can fairly well be transferred across physical systems of different sizes. As can be understood from the above, this will work all the better if the systems are "physically" close. That is to say, the transfer from one system to another works well as long as pairwise interactions remain of the same physical nature.

By effectively enforcing pairwise conservations of linear and angular momenta as described above, the present GNN framework ensures stable and realistic property predictions. These predictions remain faithful to the simulated or measured reality for a long period of time i.e., thanks to stable error accumulations over extended rollouts. The proposed approach can therefore be used with confidence to simulate the physical system, monitor this system, be used as a virtual sensor, and/or serve as a digital twin, for example. The present approach can not only advance property predictions but, in addition, it offers a framework that is interpretable and adaptable to a variety of dynamical systems. This flexibility allows for a broad applicability across fields such as robotics, aerospace engineering, biomechanics, and environmental modelling. Consequently, the present approach has the potential to impact both scientific research and practical applications.

Tests performed by the inventors with 3D granular systems (which are highly complex dynamical systems) show that the present approach demonstrates stable error accumulation over extended rollouts, generalizes effectively to unseen configurations, and robustly handles heterogeneous interactions and external forces, while offering interpretable dynamics evolution. Accordingly, the proposed framework provides a robust and adaptable solution for modelling complex dynamical systems purely from observations, bridging the gap between accurate trajectory prediction and interpretability, enhancing generalization, and enabling real-time inferences.

Finally, and beyond the advantages already noted above, embodiments of the above methods have additional advantages, starting with the ability to learn from sparse data and infer unobserved, possibly unobservable, properties (such as stress loads and deformations in 3D granular media) from other physical properties, thereby enabling virtual sensing capability. For example, trajectories may be used as inputs, in order to predict stress loads or deformations.

All this is now described in detail, in reference to particular embodiments of the invention.

### 1.2. Preferred applications

*Properties of interest.* To start with, the determined physical properties may include at least one mechanical property of some or all of the components of the physical system. Examples of mechanical properties include internal loads, stress loads, and deformations, as in the case of linkage mechanisms or 3D granular systems. Such properties are typically unobserved in practice, if not non-observable in some cases. Alternatively, or in addition, such properties may include trajectories of some or all of the components of the physical system. The trajectories typically include states of the components (e.g., positions and/or velocities) of the physical system and corresponding timestamps. Interestingly, the present methods can be used to infer unobserved properties from other measurements, as in virtual sensing techniques, something that is discussed later in detail.

*Alignment with the underlying physical system operating the real world.* In embodiments, the physical system is a system operating in the real world. In this case, the present methods may determine the initial state of the physical system based on dynamics obtained from measurements, prior to running the GNN. Thus, in embodiments, the present methods perform S121 one or more measurements of the physical system, and then determine the initial state based on dynamics obtained from the one or more measurements performed. In such cases, the physical system is assumed to be already operating in the real world, prior to iteratively executing the GNN. The measurements performed may concern physical properties and/or trajectories of some or all of the components of the system. The GNN is then accordingly aligned with the physical system. If necessary, several successive initial states (make up an initial trajectory) of the physical system are used to lash up the GNN. Note, steps S121 - S123 may be performed for the purpose of monitoring or virtual sensing the underlying physical system. Importantly, the initial measurements performed to obtain the initial states are not used as a ground truth to train a model in a supervised setting. In fact, the present approach can be applied even where no measurements are available, as long as one or more initial states can be obtained for the system.

*Virtual sensing.* In embodiments, the present methods are used for virtual sensing purposes. Virtual sensing techniques (also known as soft, proxy, inferential, or surrogate sensing) use information available from a given type of measurements to estimate a quantity of interest or another property, which differs, in its type, from the properties measured in the first place. Now, in the present context, a target property as determined at step S126 (i.e., at one or more of the multiple time steps) may differ, in its type, from the type of a property as measured by performing the initial measurements S121. Therefore, determining this target property amounts to performing virtual sensing, something that can be useful and cost-effective as some properties can be very difficult, if not impossible to characterize in real-time for certain systems. For example, stress loads and deformations can be determined from mere trajectories.

*Digital twin vs. predictive monitoring.* In embodiments, physical properties of interest are determined S126 at several time steps (preferably at each time step), something that can be exploited to effectively obtain a digital twin of the real system's dynamics. Moreover, the present methods may further monitor S127 the physical properties (as determined at several time steps) against one or more criteria, e.g., with a view to detect anomalies or malfunctions, which can be hard to detect in real-time in some applications. Note, the present methods may monitor the whole evolution of the "health state" of the system, this potentially including the location of anomaly (i.e., which part or component is concerned).

These properties can further be calculated in anticipation. That is, the execution of the GNN can anticipate the present moment. Consider a series of time steps, throughout which the virtual state of the physical system is evolved upon executing the GNN. Now, the latest time steps can correspond to future steps, thereby anticipating a future of the physical system that is currently operating in the real world. Thus, physical properties determined at such times steps can be predictively monitored. In other words, the present methods can monitor future states of the physical system as simulated by the GNN, with a view to potentially taking action (e.g., to prevent an anomaly, a malfunction, etc.) of the underlying physical system in the future. Such an approach can notably be applied to perform long-term simulations (e.g., of fatigue) of mechanical parts.

*Differential simulations.* What is more, the present methods may be used to perform differential simulations, i.e., explore long-term consequences of different scenarios, which may notably result from different decisions on the operation and/or maintenance of the physical system. In such cases, different instances of the GNN can be iteratively executed S125 based on distinct initial states. The distinct initial states can be obtained S121 in accordance with different initial dynamics of the physical system (typically at different times). Using distinct initial conditions makes it possible to determine physical properties for multiple concurrent evolution scenarios of the physical system. Note, the different instances of the GNN may possibly be executed S125 concomitantly, in parallel, in the interest of time.

To that aim, use may advantageously be made of virtual processing resources provided by one or more cloud computing platforms, in the interest of speed and flexibility. The respective virtual processing resources will typically be virtual processors, virtual processor cores, or even virtual machines. Incidentally, the parallel calculations may possibly be performed through an event-driven function as a service provided by or for the one or more cloud computing platforms, for more flexibility in the task management.

*Application: Correction of the behaviour of the underlying physical system.* Whether implemented for purposes of real-time monitoring (e.g., as a digital twin, possibly for virtual sensing purposes) or predictive monitoring, the present methods may be leveraged to take S128 - S129 action with respect to the physical system, to change a way it currently operates in the real world. The action taken depends on the one or more properties monitored and the criteria used. For example, a decision may be taken to stop the physical system or to modify its operation in order to advert an anomaly or malfunction, or otherwise change the behaviour of the physical system, e.g., to slow down or speed up a current pace.

For instance, FIG. 10 shows a system 1000 involving a computerized system 100, which is interfaced with a camera 200 and a physical system. The latter is a pumpjack 10 (a mechanical linkage) in this example. The computerized system 100 simulates the operation of the pumpjack by iteratively evolving a virtual state thereof, based on trajectories extracted (using machine learning methods) from frames obtained from the camera 200, as assumed in FIG. 10. Acting as a virtual sensor, the computer system determines properties such as stress loads on the various parts of the pumpjack. If a critical stress load is predicted (future states) or detected (current state), the computer system 100 may instruct the prime mover of the pumpjack to modify its rotation speed.

## 1.3. Preferred implementations

*Parallel directional edge processing (message passing steps).* As noted earlier, the edge-wise implementation can be broken down to directional edges. That is, the message passing steps can advantageously be performed to iteratively update the representations of nodes and edges in parallel for all directional edges of the bidirectional edges. Since each bidirectional edge involves two opposite directional edges, the message passing steps can be devised so as to enforce the conservation of both the linear momentum and the angular momentum for each bidirectional edge, while parallelizing all operations related to directional edges. In other words, all directional edges can be processed in parallel, which results in a fast and efficient implementation of sub-iterations related to message passing operations. So, not only the present approach is easily scalable but, in addition, it is compatible with a parallel implementation of the message passing steps, while permitting momenta conservation.

*Permutation-equivariant reference frames.* In embodiments, the node and edge representations are obtained by projecting vector properties of the nodes and directional edges onto edge-aligned (thus edge-local) reference frames, as illustrated in FIGS. 1 and 4. There are two directional edges for each bidirectional edge. The local reference frames can initially be precomputed at step S122, after having mapped the GNN onto the physical system of interest. Advantageously, the reference frames can be precomputed as special orthogonal group SO(3)-equivariant, translational group T(3)-invariant and permutation-equivariant reference frames, see FIG. 1. Such reference frames are referred to as SOTPE reference frames in the following. Basis vectors of such frames are anti-parallel along the direction of the corresponding edge, as discussed in detail in Section 2. Such a symmetry constraint impacts the symmetry of the resulting representations. That is, the resulting representations are obtained as special orthogonal group SO(3), translational group T(3), and permutation-invariant (SOTPI) embeddings. In other words, the above approach relies on novel, edge-local reference frames, yielding invariant embeddings.

This formulation maintains permutation equivariance by ensuring that the basis vectors invert direction when nodes are permuted. According to the inventors' conclusions, achieving SOTPI embeddings make it possible to model and encode pairwise interactions most effectively. Such representations ensure physically consistent predictions of interactions on edges and additionally facilitate the interpretation of intermediate outputs, such as forces, moments, and other system parameters. Thus, not only the above edge-wise representations make it possible to enforce the conservation of both linear and angular momenta but, in addition, they result in a more stable behaviour of the physical system in the long run and facilitate the interpretation of the intermediate results.

*GNN framework.* As illustrated in FIGS. 4 - 7, preferred embodiments rely on a pipeline involving edge-level steps of encoding, processing, decoding, and updating representations. In detail, each iteration S125 comprises, for each of the two directional edges of each bidirectional edge, steps of:

- Encoding S1251 vector properties of each directional edge and the two corresponding nodes (i.e., the nodes connected by this edge), to form latent embeddings. As noted above, this can be is achieved by projecting vector properties of the nodes and the edge onto edge-aligned reference frames, constrained to be SOTPE reference frames;

- Obtaining S1252 edge interaction embeddings from the latent embeddings. As a result of the above constraint, the edge interaction embeddings are SOTPI embeddings. The edge interaction embeddings can be obtained from the latent embeddings through a further function, preferably a learned function. The edge interaction embeddings are updated based on edge interaction embeddings as previously obtained at one or more preceding ones of the iterations;

- Updating S1254, thanks to a learned function, the edge interaction embeddings based on previous edge interaction embeddings, as obtained at one or more preceding ones of the iterations;

- Decoding S1255, from the updated edge interaction embeddings, dynamics of the two nodes. This is done so as to enforce the conservation of the linear momentum
  and the angular momentum. As discussed in detail in Section 2, this results from inductive biases applied upon training the GNN; and

- Updating S1256 states of the two nodes from the decoded dynamics.

If necessary, a history of embeddings may be updated at step S1253, should previous embeddings be necessary to update S1254 the current embeddings, as assumed in FIG. 12.

The above steps S1251 - S1256 are performed for each directional edge of each bidirectional edge, one directional edge at a time. That is, in practice, each directional edge can be treated as a separate entity. Again, a bidirectional edge refers to two directed edges that connect two bodies. Specifically, for two bodies *i and j,* a bidirectional edge forms two distinct subsystems: The $i \rightarrow j$ subsystem, which encodes the properties of the edge *ij* and the corresponding nodes i and j, and the $j \rightarrow i$ subsystem, which encodes the properties of the edge *ji* and the corresponding nodes *j* and *i.* These subsystems can be treated as two separate systems, hence the possible parallelization, as noted earlier. The above architecture ensures that each edge's counterpart (in the opposite direction) is designed to perform complementary functions that enforce the desired momenta conservation.

Message passing operations are used to update all edges (on each direction thereof) and all nodes, so as to update the virtual state of the entire physical system. I.e., the virtual state of the physical system is eventually obtained based on states as updated for all of the nodes of the GNN, thanks to message passing operations, see FIG. 7. The above steps are now discussed in detail.

Referring to FIG. 4, for any given bidirectional edge, the properties of the two corresponding directional edges and the two corresponding nodes are encoded as follow. The node properties are encoded S1251 by projecting node vector properties of the two nodes onto the edge-aligned, SOTPE reference frame corresponding to each directional edge. The directions of these reference frames are anti-parallel along the corresponding edge direction, as illustrated in FIG. 4, LHS of panel (1). The same is done for each edge direction. That is, for each bidirectional edge, the properties of the nodes are projected onto two reference frames, one basis vector of which is aligned with the edge direction; the reference frames mirror each along this edge direction. Such projections leads to first scalars, which are transformed by a first learned function.

In addition, the properties of each directional edge are projected onto the same edge-aligned reference frame, see FIG. 4, panel (1). Again, this operation is performed for each edge direction, i.e., for each directional edge and for each bidirectional edge. This leads to second scalars, which are transformed by a second learned function. One may then aggregate the outputs and transform them by applying a further learned function to obtain the latent embeddings, as illustrated in FIG. 4. Edge interaction embeddings are then obtained from the latent embeddings, thanks to another transformation, see FIG. 4. Other feature engineering approaches can be contemplated. However, the above approach is fairly simple, robust, and interpretable since the embeddings obtained are subsequently decoded.

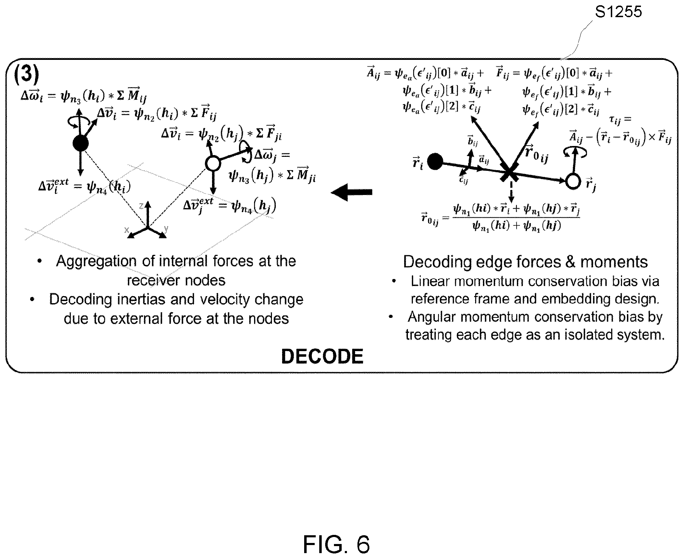

In preferred embodiments, the step of decoding S1255 the node dynamics comprises, for each directional edge, aggregating internal forces and rotational moments at each of the two corresponding nodes, and decoding velocity changes and angular velocity changes due to forces external to these two nodes, as illustrated in FIG. 6. Finally, the states of the two nodes are preferably updated (for each edge) by performing a single step Euler integration. Changes to positions follow from the updated velocities.

### 1.4. Training

The GNN may be trained by one entity and then deployed by another. In variants, the GNN is trained and deployed by a same entity, as assumed in FIG. 12. In this case, the present methods further comprise, prior to accessing the initial system state and iteratively executing the GNN, training functions involved in the GNN. This is advantageously done by introducing inductive biases in the architecture of the GNN, for it to learn to enforce, for any bidirectional edge thereof, a conservation of both the linear momentum and the angular momentum upon decoding dynamics of the two nodes corresponding to this bidirectional edge. As a result, the physics-based inductive biases are embedded within the GNN model as used at runtime.

In practice, training the GNN may notably mean learning a variety of functions, including encoders and decoders, for the encoders and decoders to respectively learn to encode and decode representations of the nodes and the bidirectional edges.

Importantly, the momenta conservation is advantageously achieved through inductive biases. Inductive bias refers to the set of assumptions that a machine learning model can make to generalize from training data to unseen data. These assumptions are often derived from prior knowledge about the problem domain and guide the learning process by influencing how the model prioritizes certain hypotheses over others, helping it make predictions when new data is encountered. Common examples include the assumption of smoothness, for instance, that nearby points in the input space should produce similar outputs, a preference for simpler models (Occam's Razor), and specific structural biases like the convolutional architecture in convolutional neural networks (CNNs), which assumes locality and translation invariance.

In addition to inductive bias, two other types of biases may be needed to guide the model toward physically consistent solutions: observational bias and learning biases. Observational biases rely on data that reflect physical principles or are enhanced through data augmentation informed by prior knowledge, helping the model learn functions and operators consistent with physical laws. Learning biases are introduced by selecting appropriate loss functions, constraints, and algorithms during training - again, guided by prior knowledge - to favour solutions that approximate underlying physical laws. This approach offers flexibility in applying physics-based constraints through various equations.

Once trained with respect to certain training systems, the GNN can always be adjusted to a new, previously unseen physical system, having a different topology. However, the trained GNN will often generalize quite well, without it being needed to retrain it.

### 1.5. Other aspects of the inventions

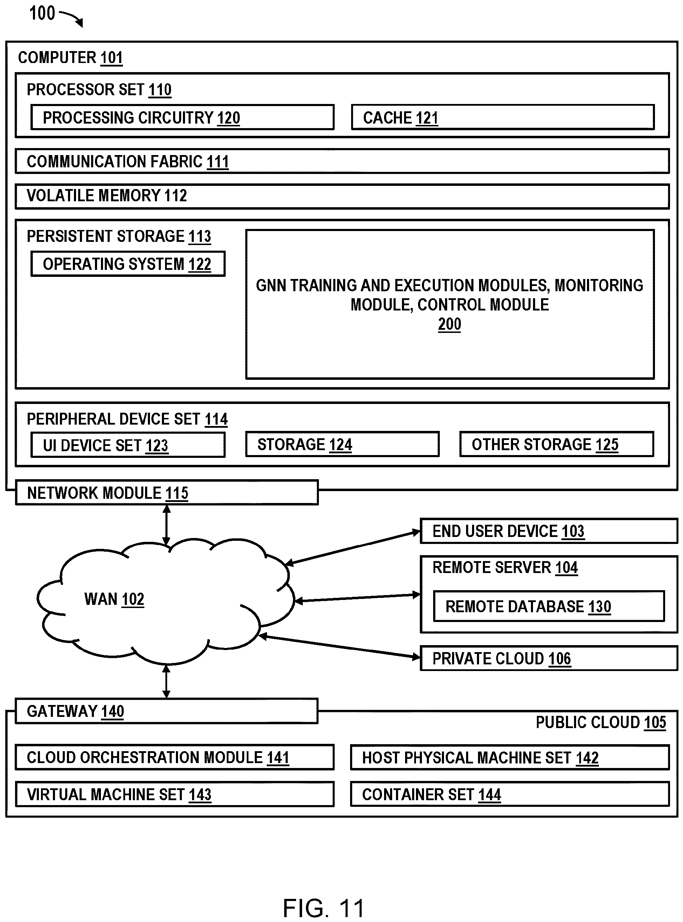

Referring to FIGS. 10 and 11, another aspect of the invention concerns a characterization system 1000 for determining physical properties of a multi-body dynamical system 10, such as described earlier in reference to FIGS. 10. The characterization system 1000 comprises processing means 110, 112, which typically form part of a computerized system 100 such as shown in FIG. 11. Such processing means typically include memory resources 112, 121 (including cache 121) and processing circuitry 120, e.g., a set of processors. The processors are configured to interact with the memory resources 112, 121 to implement steps as described earlier, starting with core steps S124 - S126.

The computerized system 100 includes at least one computer 101 and may be interfaced with cloud processing resources 105, 106, as assumed in FIG. 11. In all cases, the processing means 110, 112 are configured to perform steps of a method according to any of the embodiments described above. To that aim, the computer 101 may for instance load computerized methods (in the form of instructions) in the main memory 112 of the computer 101 for the set of processors 120 to execute such instructions. Alternatively, the processors 120 may, upon executing the computerized methods, off-load compute-intensive steps to virtual processing resources enabled by one or more cloud computing systems 105, 106. More details are provided in Section 3.

The characterization system 1000 may additionally include the multi-body dynamical system 10, as well as characterization means 200 (e.g., a camera in FIG. 10), where the latter are interfaced with the processing means 110, in operation. This way, the characterization system 1000 may characterize initial properties of the physical system 10 (or one or more components thereof), with a view to, e.g., compute initial states of the physical system 10, based on which the GNN may then be iteratively executed, as described earlier. The characterization system 1000 may further include a transducer 300, which is configured to influence the physical system. The transducer 300 is otherwise interfaced with the processing means 110, so that the transducer may take action with respect to the underlying system 10. In the example of FIG. 10, the transducer 300 is coupled to the prime move of the pumpjack 10, to modify its rotation speed (possible stop it), if necessary.

A closely related aspect of the invention concerns a program product. The latter includes a computer readable storage medium having program instructions embodied therewith. The program instructions are executable by processing means 110 of a computerized system 100 such as described above, to cause the system 100 to perform steps of a method as described in reference to the first aspect of the invention. Additional remarks concerning the present computerized systems 100 and computer program products are made in Section 3.

The above embodiments have been succinctly described in reference to the accompanying drawings and may accommodate a number of variants. Several combinations of the above features may be contemplated. Examples are given in the next section.

## 2. Specific embodiments

This section describes a physics-informed GNN framework (the "GNN framework") that combines the learning capabilities of GNNs with physics-based inductive biases embedded within the model architecture. Specifically, this framework enforces pairwise conservations of linear and angular momenta for interacting nodes. The methodology leverages a SOTPE reference frame computed for each edge, which ensures physically consistent predictions of interactions on edges and facilitates the interpretation of intermediate outputs, including forces, moments, and system parameters. Evaluated on a 3D granular system with inelastic collisions, this framework demonstrates stable error accumulation over extended rollouts, generalizes effectively to unseen configurations, and robustly handles heterogeneous interactions and external forces, while offering interpretable dynamics evolution. This framework provides a robust and adaptable solution for modelling complex dynamical systems purely from observations, bridging the gap between accurate trajectory prediction and interpretability, enhancing generalization, and enabling real-time inference.

### 2.1. Introduction

The following GNN framework offers accurate trajectory predictions while providing interpretable insights into the forces and moments governing system dynamics. Unlike traditional methods, this GNN framework infers forces, moments, and other system parameters, such as masses and moments of inertia, directly from observed trajectory data, without needing any supervisory signals. This is achieved by embedding biases that enforce conservation laws for linear and angular momenta within interactions modelled over edges, and by aligning time-stepping with Newtonian dynamics. As a result, The GNN framework enhances both predictive accuracy and interpretability, enabling generalization and extrapolation to new operating conditions and system configurations. By incorporating universal conservation laws, the present GNN framework offers a versatile solution for modelling a wide range of dynamical systems.

This framework involves the following three contributions:

(i) SOTPE edge-local reference frames;

(ii) SOTPI edge embeddings that encode pairwise interactions, enabling the decoding of equal and opposite internal forces on each bidirectional edge. This mechanism makes it possible to conserve linear momentum and achieve precise updates to the linear velocity of each node; and

(iii) Each edge is treated as an isolated dynamical system conserving angular momentum about a chosen reference point (the point of application of the internal force). This allows for the calculation of pairwise rotational torque on each edge. These torques contribute to updating each node's angular velocity and orientation, ensuring accurate rotational dynamics of the physical system captured.

By effectively incorporating inductive biases into its architecture, the GNN framework not only advances trajectory prediction but also offers a framework that is interpretable and adaptable to a variety of dynamical systems.

### 2.1.1. GNN framework

The dynamics of multi-body systems are assumed to be governed by both internal and external forces and moments. Internal forces arise from pairwise interactions-such as contact, gravitational attraction, and friction-and adhere to Newton's third law, resulting in equal and opposite forces that cancel each other out and thereby conserve the total linear momentum of each interacting pair. In contrast, angular momentum due to internal forces and moments is conserved for the entire system about any arbitrary reference point within the coordinate system. Together, these internal forces and moments govern the relative motion and rotational dynamics of the system's components.

In the absence of external forces, a system inherently conserves linear and angular momentum. However, when external forces are introduced, they modify the system's total momentum, while internal interactions continue to preserve momentum conservation. To account for these fundamental principles, the proposed framework integrates inductive biases into the learning architecture of the present GNN framework, thereby ensuring the conservation of both linear and angular momentum.

Firstly, the GNN framework introduces novel SOTPE edge-local reference frames combined with invariant (SOTPI) edge embeddings, as discussed in Section 1. This setup effectively encodes pairwise interactions, ensuring the conservation of linear momentum and enabling precise updates to each node's velocity. Unlike Clofnet, which employs SO-(3) edge reference frames, the present formulation maintains permutation equivariance by ensuring that the basis vectors invert direction when nodes are permuted.

Secondly, SOTPI edge embeddings make it possible to model pairwise interactions effectively. For each directional edge, each SOTPI embedding integrates: (i) Aggregated node embeddings, which characterize node properties such as mass, moment of inertia, and constrained degrees of freedom, as imposed by Dirichlet boundary conditions; (ii) Edge scalar embeddings that represent the magnitude of the distance between nodes; and (iii) Projected vector feature embeddings that are obtained by projecting vector features from both the sender and receiver nodes onto the edge-local reference frame corresponding to this directional edge. Edge forces are then decoded from this edge interaction embedding as permutation-invariant coefficients applied to the permutation-equivariant edge reference frame. This methodology inherently generates permutation-equivariant edge forces that are equal in magnitude and opposite in direction for bidirectional edges, ensuring physical consistency and adherence to Newton's third law.

Thirdly, the present approach involves introduces a novel framework for modelling multi-body dynamics by treating each edge, along with its connected sender and receiver nodes, as an independent dynamical subsystem. This approach enforces the conservation of pairwise angular momentum around a reference point, i.e., the point of action of internal forces. This reference point is determined using the position vectors and scalar features of the interacting nodes, ensuring permutation invariance (i.e., remaining the same under node permutation). The angular momentum of both the sender and receiver nodes about this reference point comprises translational and rotational components. Conservation of angular momentum requires that the changes in angular momentum for the two connected bodies be equal in magnitude and opposite in direction. These changes are governed by an angular interaction vector, analogous to how internal force vectors govern changes in linear momentum.

In the present GNN framework, angular interaction vectors are decoded from the interaction embeddings as SOTPE vectors, similar to the decoding process for internal forces. By subtracting the contribution of internal forces from the change in angular momentum of each connected node, the framework derives the rotational torque for each node.

While global angular momentum conservation holds for a multi-body system about any single reference point within the coordinate system, the GNN framework uniquely enforces conservation locally at the edge level, specifically at the point of action of internal forces. This localized enforcement allows for a modular and fine-grained representation of system dynamics. Notably, this edge-level formulation can also be interpreted as a deformable beam element, yielding an identical formulation of internal forces and moments arising from the relative motion of the connected nodes. By capturing physically consistent forces and rotational torques at the edge level, the present framework inherently supports the system-wide propagation of angular momentum conservation.

Finally, the framework aggregates the computed internal forces and rotational torques at each node to generate force and torque vectors that drive the system's overall dynamics. This aggregation preferably constitutes a single layer within the GNN model. To further enhance interpretability and ensure physical consistency, a forward time integration bias is introduced, whereby the aggregated node dynamics (such as force and torque vectors) are used to predict the updated state of the system for any given time step. This updated state is then iteratively fed back into the GNN, creating a sequence of updates that emulate the message-passing mechanism inherent to graph neural networks. With each sub-time step, contributions from spatially distant nodes (two-hop and beyond) are effectively accumulated, enabling a more comprehensive propagation of gradient information, and improving the model's capacity to capture interactions from far-field nodes. Moreover, the availability of intermediate force and moment vectors at each update step significantly contributes to the model's interpretability, providing insights into the evolving dynamics at intermediate steps.

FIGS. 4 to 7 provide a comprehensive overview of the GNN framework, which employs an encode-process-decode-update architecture to model multi-body dynamical systems represented as graphs, where nodes denote bodies, and bidirectional edges denote their interactions. Each node is characterized by vector and scalar features describing its state, while edges capture relative positions through distance vectors. In the encode step, an edge-local reference frame is established for each edge and vector features form connected nodes are projected onto this reference frame. These projections, combined with edge and node scalar features, generate high-dimensional embeddings. The process edge interaction step refines these embeddings to form latent representations that capture complex edge interactions. During the decode step, force and torque vectors are generated within the edge reference frame, ensuring the conservation of linear and angular momentum for interacting bodies. These forces and torques are then aggregated at each node. Additionally, by decoding node-wise mass and moment of inertia from scalar features, dynamics vectors are computed, which reflect changes in velocity and angular velocity. In the final update step, these dynamics vectors are applied to update each node's state via forward Euler integration, based on Newtonian mechanics. The updated graph is iteratively fed back into the pipeline, enabling multi-step updates for precise and interpretable modelling of the evolving system dynamics.

The proposed framework was validated using a complex multi-body dynamical system composed of 3D spherical granular particles undergoing inelastic collisions. This system encompasses diverse and complex interactions, including normal contact forces, multi-step tangential shearing contacts, and frictional forces. The obtained results demonstrate the high accuracy of the proposed framework, with stable error accumulation over very long trajectory rollouts and effective generalization to various operating conditions and configurations unseen during training. Highlighting interpretability, the learned model has proved to adhere to conservation principles for both linear and angular momentum. Moreover, the proposed framework is able to handle heterogeneous interactions involving multiple types of bodies and its robust performance in the presence of external forces.

## 2.2. Results

The inventors evaluated the proposed method on a 6-DOF dynamical system involving granular spheres undergoing collisions. Training data was generated using the Discrete Element Method (DEM) via the MFiX Simulator, incorporating forces such as normal collision forces (due to deformation), tangential frictional forces, damping forces, and interphase forces (see Table for governing equations). For each scenario, sparse training data consisting of 5 trajectories of 60 particles sampled at $10^{-4}$ second intervals for 1500 timesteps was used, with a separate trajectory reserved for testing.

The method demonstrates its capability to efficiently learn physical dynamics from limited data, accurately predict long-term behaviours, and adapt to different systems, including those with varying interaction parameters and external forces. Additionally, counterfactual experiments validated the properties of the learned dynamics, such as conservation of momentum, impact behaviour, and rotational dynamics.

### 2.2.1. Learning on system with identical particle and wall interactions

In this case, granular sphere interactions rely on iso particle-particle and particle-wall collision parameters. Concerning the conservation of linear and angular momentum, a first experiment establishes the model's ability to learn collision dynamics involving identical interaction parameters for both particle-particle and particle-wall collisions. Dynamics such as deformation-driven normal forces, tangential sliding forces, and damping effects were learned and respected over long rollouts. Concerning the validation of learned dynamics: Counterfactual experiments demonstrated the model's ability to preserve conservation properties, including linear and angular momentum, during extended predictions. Additionally, impact behaviour and rotations were captured accurately.

### 2.2.2. Learning on system with heterogeneous particle and wall interactions

Here, granular sphere interactions require particle-particle and particle-wall collision parameters. This experiment focuses on learning dynamics with heterogeneous interaction parameters, such as varying friction coefficients and damping forces for particle-particle and particle-wall collisions. Despite sparse training trajectories, the model successfully captured these varying dynamics and produced physically consistent results during testing.

### 2.2.3. Learning on System with External Forces

This experiment considered heterogeneous collisions with added gravity. A new system was introduced where gravitational forces acted on the particles in addition to heterogeneous particle-particle and particle-wall collisions. The training data remained limited to 5 trajectories of 60 particles. Testing on unseen cases demonstrated the model's ability to adapt to external forces while preserving physical consistency across predictions.

### 2.2.4. Extrapolation to large systems with complex boundaries

The model was generalized and scaled from a 60-particle system to a 2073-particle mixing simulation with rotating boundaries in an accelerating cylinder. This large-scale simulation demonstrated the method's scalability to systems with complex geometries and dynamic boundaries. The model accurately captured the dynamics of particle mixing and interactions, showcasing robustness and adaptability to larger systems.

## 2.3. Methods

### 2.3.1. Graph representation of multi-body dynamical systems

A 6-DOF multi-body system with interacting components can be effectively represented as a graph $G = (V, E)$, where $V = \{v_i \mid i = 1, 2, ..., n\}$ denotes the set of bodies, and $E = \{(e_{ij}, e_{ji}) \mid i \neq j, (i, j) \in V \times V\}$ represents bidirectional edges that encode interactions between distinct bodies, excluding self-loops. Edge connectivity is determined either from the system's known geometry or dynamically computed using metrics such as Euclidean distance. Specifically, for a granular collision dynamics, edges are established based on a sphere of influence with a radius of $K \times d_i$, where $d_i$ is the diameter of each spherical body and $K$ is a hyperparameter. Consequently, an edge between two bodies i and j is formed if the distance between their centers satisfies $\| \vec{r}_i - \vec{r}_j \| \leq K \times d_i$.

Each node $v_i$ in the graph is assigned two types of node features: (1) Vector Features, i.e., $V_i = [\vec{v}_i^t, \vec{\omega}_i^t, \vec{v}_i^{t-1}, \vec{\omega}_i^{t-1}]$, which include the linear velocity $\vec{v}_i^t$ and angular velocities $\vec{\omega}_i^t$ at the current time step $t$, as well as their values $\vec{v}_i^{t-1}$ and $\vec{\omega}_i^{t-1}$ at the previous time step $t$ - 1; and (2) Scalar Features, i.e., $\alpha_i$. These scalars capture system properties such as boundary conditions, mass, density, and volume. Explicit values for properties like inertia or moments of inertia are not required; the model learns to infer these from the provided scalar features. Boundary conditions are encoded as a 6-element scalar vector, where each element corresponds to a degree of freedom and its constraint (e.g., 0 for fixed, 1 for type-1, 2 for type-2, etc.). This encoding encapsulates constraints on each degree of freedom, including any fixed or restricted components.

Each edge $ij$ is characterized by the edge distance vector between the connected nodes $\vec{dx}_{ij} = (\vec{r}_j - \vec{r}_i)$, where $\vec{r}_i$ and $\vec{r}_j$ represent the position vectors of the receiver *node j* and the sender node *i* respectively. Additionally, edge features include scalar labels that encode different types of interactions, such as collision forces, joint constraints, or electromagnetic influences. This labeling allows the model to distinguish and appropriately process the diverse interaction mechanisms present within the multi-body system.

The graph representation, constructed from the system's physical properties, serves as the input data for the proposed method. At each time step $t$, the model processes the graph and predicts changes in the state of each node, specifically the changes in velocity $\delta v$, angular velocity $\delta \omega$ and position vector $\delta r$). The training data consists of input-output pairs derived from observed trajectories. Each pair comprises the graph representation at time $t$ and the corresponding changes in state from $t$ to $t$ + 1. When the positions and angular velocities of the system's components are observed, velocities and angular velocities are computed using finite differences. Alternatively, directly measured state vectors can be used if available. The vector features of each node: $V_i = [\vec{v}_i^t, \vec{\omega}_i^t, \vec{v}_i^{t-1}, \vec{\omega}_i^{t-1}]$, are scaled by their maximum magnitude for normalization. Additionally, the edge distance vector, $\vec{dx}_{ij}$ is scaled to ensure its magnitude lies between 0 and 1. The scaled edge vector, $\vec{dx}_{ij,scaled}$, is computed as:

$$\vec{dx}_{ij,\text{scaled}} = \left( \frac{\vec{dx}_{ij}}{\| \vec{dx}_{ij} \|} \right) \cdot \frac{\| \vec{dx}_{ij} \| - \| \vec{dx}_{ij} \|_{\min}}{\| \vec{dx}_{ij} \|_{\max} - \| \vec{dx}_{ij} \|_{\min}}.$$

### 2.3.2. GNN architecture

The GNN model utilizes input-output pairs as training data to learn the system's implicit, edge-wise interaction dynamics. By integrating inductive biases that enforce the conservation of linear and angular momentum, the model ensures the learned dynamics are physically consistent. The model follows an encode-edge processing-decode-update architecture, as illustrated in FIGS. 4-7.

In this architecture, the system state at time step $t$ progresses through several sub-time steps. The process begins with encoding the initial graph representation. This is followed by edge processing, where the latent interaction embeddings are calculated based on the encoded features. These embeddings are then decoded to predict edge-wise forces and moments. The predicted forces and moments are aggregated at each node to update its state. Specifically, the model outputs node-wise changes in linear velocity $(\vec{\Delta v_i})$, angular velocity $(\vec{\Delta \omega_i})$, and displacement $(\vec{\Delta r_i})$. To train the model, the predicted changes are compared against the ground truth using a mean squared error (MSE) loss function. This loss is subsequently backpropagated to optimize the model parameters, enabling the network to accurately capture the underlying dynamics of the multi-body system.

### 2.3.2.1. Encode

In the Encode step, the vector and scaler properties of nodes and edges are transformed into high-dimensional embeddings. These embeddings serve as a comprehensive representation of the interactions for each edge, capturing the essential features necessary for the model to understand the system's dynamics.

### 2.3.2.2. Edge local reference frame calculation

A permutation equivariant edge-wise local reference frame is constructed to enforce conservation laws. This process is illustrated in FIG. 8. For each edge $e_{ij}$, one defines the first basis vector $\vec{a}_{ij}$ as the unit vector along the distance vector between nodes *i* and *j*:

$$\vec{a}_{ij} = \frac{\vec{r}_j - \vec{r}_i}{\| \vec{r}_j - \vec{r}_i \|}$$

This vector $\vec{a}_{ij}$ is permutation equivariant, meaning that swapping nodes i and *j* reverses its direction. This property ensures symmetry in interactions. Additionally, $\vec{a}_{ij}$ is both rotation equivariant and translation invariant, maintaining consistency under rotational and translational transformations. The challenge lies in constructing the remaining basis vectors, which must form an orthogonal set with $\vec{a}_{ij}$ while preserving permutation equivariance. A straightforward approach, such as computing $\vec{x}_i \times \vec{x}_j$, initially produces a permutation equivariant vector due to the anti-commutative nature of the cross product. However, deriving a third basis vector through another cross-product results in a permutation invariant vector, which is unsuitable for the model's requirements. To address this, one may introduce an intermediate vector based on the state vectors of the nodes connected by the edge *ij*:

$$\vec{b}_{ij}{}' = \frac{\vec{v}_j + \vec{v}_i}{\| \vec{v}_j + \vec{v}_i \|} + \frac{\vec{\omega}_j + \vec{\omega}_i}{\| \vec{\omega}_j + \vec{\omega}_i \|} + \frac{(\vec{v}_j - \vec{v}_i) \times (\vec{r}_j - \vec{r}_i)}{\| (\vec{v}_j - \vec{v}_i) \times (\vec{r}_j - \vec{r}_i) \|} + \frac{(\vec{\omega}_j - \vec{\omega}_i) \times (\vec{r}_j - \vec{r}_i)}{\| (\vec{\omega}_j - \vec{\omega}_i) \times (\vec{r}_j - \vec{r}_i) \|}.$$

This intermediate vector is both permutation and translation invariant and rotation equivariant. One may then decompose $\vec{b}_{ij}{}'$ into components parallel and perpendicular to $\vec{a}_{ij}$:

$$\vec{b}_{ij\|\vec{a}_{ij}}{}' = \mathrm{proj}_{\vec{a}_{ij}} \vec{b}_{ij}{}' = \left( \frac{\vec{a}_{ij} \cdot \vec{b}_{ij}{}'}{\| \vec{a}_{ij} \|^2} \right) \vec{a}_{ij},$$

$$\vec{b}_{ij\perp\vec{a}_{ij}}{}' = \vec{b}_{ij}{}' - \vec{b}_{ij\|\vec{a}_{ij}}{}'$$

Both components are permutation invariant. Using the perpendicular component, one defines the second basis vector:

$$\vec{b}_{ij} = \frac{\vec{b}_{ij\perp\vec{a}_{ij}}{}' \times \vec{a}_{ij}}{\| \vec{b}_{ij\perp\vec{a}_{ij}}{}' \times \vec{a}_{ij} \|}$$

This cross product yields a permutation equivariant vector by combining a permutation invariant vector with a permutation equivariant one. Finally, the third basis vector is computed as

$$\vec{c}_{ij} = \frac{\vec{b}_{ij\|\vec{a}_{ij}}{}' \times \vec{b}_{ij}}{\| \vec{b}_{ij\|\vec{a}_{ij}}{}' \times \vec{b}_{ij} \|}$$

Since $\vec{b}_{ij\|\vec{a}_{ij}}{}'$ is parallel to $\vec{a}_{ij}$, the resulting vector $\vec{c}_{ij}$ is orthogonal to both $\vec{a}_{ij}$ and $\vec{b}_{ij}$, while also maintaining permutation equivariance. By constructing this orthogonal basis set $\vec{a}_{ij}$, $\vec{b}_{ij}$, $\vec{c}_{ij}$ that is both permutation and rotation equivariant, the model ensures symmetrical interactions, which are vital for enforcing the conservation of linear and angular momentum.

### 2.3.2.3. Degeneracy of the local reference frame

The local reference frame becomes degenerate under two conditions: 1) When the intermediate vector $\vec{b}_{ij}{}' = 0$: In this scenario, the edge system is stationary, exhibiting no linear or angular velocities. The interaction can be fully captured using only the first basis vector $\vec{a}_{ij}$ along the edge. 2) When $\vec{b}_{ij}{}'$ is parallel to $\vec{a}_{ij}$: This indicates that the velocities and angular velocities are aligned with the edge vector, implying that the interaction is constrained along the edge direction. Consequently, $\vec{a}_{ij}$ sufficiently represents the interaction. In both cases, the system remains effectively non-degenerate for representing the relevant interactions, ensuring robust and accurate modelling of the multi-body system's dynamics.

### 2.3.2.4. Encoding edge and node features

After establishing the edge-wise local reference frames, the vector features of the connected nodes are projected onto these reference frames. Specifically, for an edge *ij,* the sender node's vector features can be defined as:

$$\mathbf{V}_i = [\vec{v}_i^t, \vec{\omega}_i^t, \vec{v}_i^{t-1}, \vec{\omega}_i^{t-1}]$$ . These features are projected onto the basis vectors of the edge's reference frame $\vec{a}_{ij}, \vec{b}_{ij}, \vec{c}_{ij}$. Conversely, for the receiver node *j*, its vector features $\mathbf{V}_j$ are projected onto the anti-parallel reference frame, specifically $-\vec{a}_{ij}, -\vec{b}_{ij}, -\vec{c}_{ij}$. This projection strategy ensures that the scalar projections for the sender (*i*) and receiver (*j*) nodes remain invariant when the nodes are swapped.

For instance, consider reversing the edge direction to *ji*. In this case, the sender node *j*'s features $\vec{a}_{ji}, \vec{b}_{ji}, \vec{c}_{ji}$ are projected onto the reference frame of edge *ji,* which corresponds to $-\vec{a}_{ij}, -\vec{b}_{ij}, -\vec{c}_{ij}$. In addition, the receiver node *i*'s features are then projected onto the anti-parallel reference frame $-\vec{a}_{ji}, -\vec{b}_{ji}, -\vec{c}_{ji}$ which is equivalent to $\vec{a}_{ij}, \vec{b}_{ij}, \vec{c}_{ij}$.

This ensures that node *i*'s vectors are always aligned with the reference frame of edge *ij,* and node *j*'s vectors are aligned with edge *ji,* regardless of the edge direction. By maintaining this structure, one achieves permutation invariant scalar features for constructing a permutation invariant interaction embedding.

Furthermore, the projected scalars, and thus the resulting interaction embeddings, inherit additional symmetries based on the properties of the edge reference frame. Specifically, if the reference frame is rotation equivariant, the projected scalars remain rotation invariant. This is because the relative alignment between vectors and the basis vectors stays consistent under rotation. Similarly, since the state vectors (e.g., velocity and angular velocity) are translation invariant, the projected scalars inherit translation invariance provided the reference frame is translation invariant.

These projected scalars for both sender and receiver nodes are transformed into higher-dimensional embeddings, denoted as $\epsilon_{ij}^{\text{sender}}$ and $\epsilon_{ij}^{\text{receiver}}$, using the function $\phi_{e_1}$, which is implemented as a multi-layer perceptron (MLP):

$$\epsilon_{ij}^{\text{sender}} = \phi_{e_1}\left(\text{proj}_{\text{frame}} \mathbf{V}_i\right), \quad \epsilon_{ij}^{\text{receiver}} = \phi_{e_1}(\text{proj}_{\text{frame}} \mathbf{V}_j).$$ Additionally, one may create a permutation invariant (as well as translation invariant and rotation equivariant) embedding from the edge distance vector $\Delta\vec{x}_{ij} = \vec{r}_j - \vec{r}_i$ using another

MLP $\phi_{e_2}$: $\epsilon_{ij}^{edge} = \phi_{e_2}\left(\Delta\vec{x}_{ij}\right)$. The node scalar features $\alpha_i$ for each node $v_i \in G(V, E)$ are encoded using the MLP function $\phi_n$: $h_i = \phi_n(\alpha_i)$. For an edge *ij,* the node embeddings $h_i$ and $h_j$ correspond to nodes *i* and *j,* respectively. The edge embeddings, $\epsilon_{ij}^{edge}$, $\epsilon_{ij}^{sender}$, $\epsilon_{ij}^{receiver}$, along with node embeddings $h_j, h_j$, are then processed in the subsequent step to create an edge interaction embedding.

### 2.3.2.5. Edge processing

In the Edge Processing step, the edge embeddings are first combined and then transformed using a function $\theta_e$ to produce a permutation invariant edge embedding:

$$\epsilon_{ij} = \theta_e\left(\epsilon_{ij}^{\text{edge}} + \epsilon_{ij}^{\text{sender}} + \epsilon_{ij}^{\text{receiver}} + h_i + h_j\right)$$

The resulting embedding is then added to the previous layer's edge embedding, noted $\epsilon_{ij}^{L-1}$. A subsequent layer normalization operation ($\theta_{LN}$) is applied, resulting in the updated interaction embedding $\varepsilon_{ij}'$. The recursive dependence of the current edge embedding on the previous step's interaction representation is essential for capturing dynamics that unfold over multiple time steps. This structure enables the model to account for complex phenomena, such as tangential frictional forces that arise from sliding interactions between two colliding spheres.

### 2.3.2.6. Decode step

In the Decode step, the edge interaction embedding $\varepsilon_{ij}'$ is decoded using multiple MLP functions to extract the internal forces $\vec{F}_{ij}$ and rotational torques $\vec{\tau}_{ij}$, ensuring the conservation of both linear and angular momentum. These forces and torques are then aggregated for each node to account for the cumulative effects of all interactions.

Additionally, the decode step involves estimating the inverse mass $1/m_i$ and inverse moment of inertia $1/I_i$ for each node from their scalar embeddings. These values are subsequently used to compute the change in linear velocity $\Delta\vec{v}_i$ and

angular velocity $\overrightarrow{\Delta\omega_j}$, enabling accurate updates to the system's dynamics. If external forces are present, the changes in velocity and angular velocity are decoded directly from the node scalar embeddings $h_i$ for each node $v_i$. This allows the model to incorporate both internal interactions and external influences in a physically consistent manner.

### 2.3.2.6. Decoding internal forces

The permutation-invariant edge interaction embedding $\varepsilon_{ij}{'}$ is decoded into coefficients, which are also permutation-invariant, and then projected onto the permutation-equivariant reference frame basis vectors $\vec{a}_{ij}, \vec{b}_{ij}, \vec{c}_{ij}$. This results in the internal forces $\vec{F}_{ij}$ as follows:

$$\vec{F}_{ij} = \psi_{e_f}(\epsilon_{ij}{'})[0] \cdot \vec{a}_{ij} + \psi_{e_f}(\epsilon_{ij}{'})[1] \cdot \vec{b}_{ij} + \psi_{e_f}(\epsilon_{ij}{'})[2] \cdot \vec{c}_{ij}$$

Here, $\psi_{e_f}(\varepsilon_{ij}{'})$ provides the scalar coefficients for the basis vectors. By construction, the forces are anti-symmetric, ensuring conservation of linear momentum: $\vec{F}_{ij} = -\vec{F}_{ji}$. This anti-symmetry guarantees that the internal forces between any two connected nodes $i$ and $j$ are equal in magnitude and opposite in direction, maintaining the physical principle of momentum conservation within the system.

### 2.3.2.7. Decoding Rotational Torque: Isolated Edge Dynamical System

To enforce the conservation of angular momentum, each edge is treated as an isolated dynamical system, applying the conservation law individually. Below is illustrated how angular momentum conservation is maintained for two interacting bodies, $i$ and $j$, relative to a reference point $\vec{r}_{0_{ij}}$.

Conservation of angular momentum for two interacting bodies. In a multi-body system, the angular momentum of a body about a reference point $\vec{r}_{0_{ij}}$ includes contributions from both its rotational and translational motion. Let $\vec{r}_i$ and $\vec{r}_j$ represent the position vectors of bodies $i$ and $j$, respectively. The linear momentum of body $i$ is defined as $\vec{P}_i = m_i \vec{v}_i$, where $m_i$ is the mass and $\vec{v}_i$ is the velocity. The angular velocity of a body is denoted by $\vec{\omega}_i$.

Before the Interaction, the total angular momentum of the system about $\vec{r}_{0_{ij}}$ is:

$$L^{\text{initial}} = I_i \vec{\omega}_i^{\text{initial}} + \left(\vec{r}_i - \vec{r}_{0_{ij}}\right) \times \vec{P}_i^{\text{initial}} + I_j \vec{\omega}_j^{\text{initial}} + \left(\vec{r}_j - \vec{r}_{0_{ij}}\right) \times \vec{P}_j^{\text{initial}}$$

After the interaction, the total angular momentum is of the system becomes:

$$L^{\text{final}} = I_i \vec{\omega}_i^{\text{final}} + \left(\vec{r}_i - \vec{r}_{0_{ij}}\right) \times \vec{P}_i^{\text{final}} + I_j \vec{\omega}_j^{\text{final}} + \left(\vec{r}_j - \vec{r}_{0_{ij}}\right) \times \vec{P}_j^{\text{final}}$$

Conservation law. In the absence of external torques, the conservation of angular momentum dictates that $L^{\text{initial}} = L^{\text{final}}$. Expanding and rearranging the terms, one obtains:

$$-I_i\left(\vec{\omega}_i^{\text{final}} - \vec{\omega}_i^{\text{initial}}\right) + \left(\vec{r}_i - \vec{r}_{0_{ij}}\right) \times \left(-\Delta\vec{P}_i\right) = I_j\left(\vec{\omega}_j^{\text{final}} - \vec{\omega}_j^{\text{initial}}\right) + \left(\vec{r}_j - \vec{r}_{0_{ij}}\right) \times \Delta\vec{P}_j$$

Alternatively, this can be expressed as:

$$-\left(I_i\left(\vec{\omega}_i^{\text{final}} - \vec{\omega}_i^{\text{initial}}\right) + \left(\vec{r}_i - \vec{r}_{0_{ij}}\right) \times \Delta\vec{P}_i\right) = I_j\left(\vec{\omega}_j^{\text{final}} - \vec{\omega}_j^{\text{initial}}\right) + \left(\vec{r}_j - \vec{r}_{0_{ij}}\right) \times \Delta\vec{P}_j$$

Internal forces and angular momentum interaction. The internal forces between the two bodies conserve linear momentum and are defined as $\vec{F}_{ij} = -\vec{F}_{ji}$. One may introduce an internal angular interaction vector $\vec{A}_{ij}$ to capture the changes in angular momentum due resulting from interactions:

$$\vec{A}_{ij} = I_i\left(\vec{\omega}_i^{\text{final}} - \vec{\omega}_i^{\text{initial}}\right) + \left(\vec{r}_i - \vec{r}_{0_{ij}}\right) \times \Delta\vec{P}_i$$

$$\vec{A}_{ji} = I_j\left(\vec{\omega}_j^{\text{final}} - \vec{\omega}_j^{\text{initial}}\right) + \left(\vec{r}_j - \vec{r}_{0_{ij}}\right) \times \Delta\vec{P}_j$$

These vectors satisfy the relationship $\vec{A}_{ij} = -\vec{A}_{ji}$.

Change in rotational angular momentum. The change in rotational angular momentum for each body is computed as:

$$I_i\left(\vec{\omega}_i^{\text{final}} - \vec{\omega}_i^{\text{initial}}\right) = \vec{A}_{ij} - \left(\vec{r}_i - \vec{r}_{0_{ij}}\right) \times \vec{F}_{ij}$$

$$I_j\left(\vec{\omega}_j^{\text{final}} - \vec{\omega}_j^{\text{initial}}\right) = \vec{A}_{ji} - \left(\vec{r}_j - \vec{r}_{0_{ij}}\right) \times \vec{F}_{ji}$$

Inductive bias in the GNN framework. For any edge $ij$ connecting nodes $i$ and $j$, the internal angular interaction vector $\vec{A}_{ij}$ is decoded from the edge interaction embedding $\varepsilon_{ij}'$ using the function $\psi_{e_a}$. The permutation invariant edge interaction embedding $\varepsilon_{ij}'$ is transformed into scalar coefficients, which are then mapped onto the permutation-equivariant reference frame basis vectors $\vec{a}_{ij}, \vec{b}_{ij}, \vec{c}_{ij}$:

$$\vec{A}_{ij} = \psi_{e_a}\left(\epsilon_{ij}'\right)[0] \cdot \vec{a}_{ij} + \psi_{e_a}\left(\epsilon_{ij}'\right)[1] \cdot \vec{b}_{ij} + \psi_{e_a}\left(\epsilon_{ij}'\right)[2] \cdot \vec{c}_{ij}$$

This mapping ensures the anti-symmetry condition $\vec{A}_{ij} = -\vec{A}_{ji}$. Next, the point of action for the internal force, denoted as $\vec{r}_{0_{ij}}$, is determined using the function $\psi_{n1}$. It is computed as a weighted sum of the positions of nodes $i$ and $j$, with weights derived from their scalar embeddings $h_i$ and $h_j$.

$$\vec{r}_{0_{ij}} = \frac{\psi_{n1}(h_i) \cdot \vec{r}_i + \psi_{n1}(h_j) \cdot \vec{r}_j}{\psi_{n1}(h_i) + \psi_{n1}(h_j)}$$

This ensures that the point of application remains consistent across bidirectional edges: $\vec{r}_{0_{ji}} = \vec{r}_{0_{ij}}$. Once $\vec{F}_{ij}, \vec{A}_{ij}$, and $\vec{r}_{0_{ij}}$ are decoded for edge $ij$, the rotational torque on the receiver node $j$ is computed as:

$$I_j \cdot \Delta\vec{\omega}_j = \vec{A}_{ij} - \left(\vec{r}_{0_{ij}} - \vec{r}_j\right) \times \vec{F}_{ij} \cdot \lambda_{ij}.$$

Here $\lambda_{ij} = \psi_e(\varepsilon_{ij}')$ represents a scalar decoded from the edge interaction embedding, introduced to enhance stability by mitigating the influence of negligible noisy edge forces on the calculation of rotational torque. This approach ensures that the predicted rotational torques between nodes are physically consistent, thereby upholding the conservation of angular momentum throughout the system.

### 2.3.2.8. Aggregation of edge forces and moments on the nodes

The decoded forces and moments from each edge are aggregated on the receiver nodes. These aggregated internal forces and moments are then used to determine the changes in linear and angular velocities for each node.

### 2.3.2.9. Decoding Change in Velocity and Angular Velocity for Each Node

Using the functions $\psi_{n2}$ and $\psi_{n3}$, the inverse mass $1/m_i$ and inverse moment of inertia $1/I_i$ are decoded from each node's scalar embeddings $h_i$. These decoded values are utilized to compute the changes in linear velocity $\Delta\vec{v}_i$ and angular velocity $\Delta\vec{\omega}_i$ for each node:

$$\Delta\vec{v}_i = \psi_{n2}(h_i) \cdot \sum\vec{F}_{ij}, \quad \Delta\vec{\omega}_i = \psi_{n3}(h_i) \cdot \sum\vec{M}_{ij}$$

where $\sum\vec{F}_{ij}$ represents the total internal force acting on node $i$ from all connected edges and $\sum\vec{M}_{ij}$ represents the total internal torque acting on node $i$. These updates ensure accurate changes in the system's dynamics based on both internal interactions and node-specific properties.

### 2.3.2.10. Decode external forces

Additionally, when external forces are present, the change in velocity due to external influences is decoded using the function $\psi_{n4}$, i.e., $\Delta\vec{v}_i^{\text{ext}} = \psi_{n4}(h_i)$ .

### 2.3.2.11. Update

Finally, the net change in both linear and angular velocities, resulting from internal and external forces, is computed and applied to update the node states. This makes it possible to advance the system dynamics forward in time. The net change in linear velocity is computed as $\Delta\vec{v}_i^{\text{net}} = \Delta\vec{v}_i + \Delta\vec{v}_i^{\text{ext}}$ . Thus, the updated velocity of node $i$ is $\vec{v}_i^{\text{new}} = \vec{v}_i + \Delta\vec{v}_i^{\text{net}}$ . Similarly, the net change in angular velocity is given by $\Delta\vec{\omega}_i^{\text{net}} = \Delta\vec{\omega}_i$ , resulting in the updated angular velocity $\vec{\omega}_i^{\text{new}} = \vec{\omega}_i + \Delta\vec{\omega}_i^{\text{net}}$ . Subsequently, the position of each node is updated using the computed velocities through single-step Euler integration, utilizing the same time step $\Delta t$ as used during forward differencing:

$$\Delta\vec{x}_i = \frac{(\vec{v}_i + \vec{v}_i^{\text{new}})}{2}\Delta t$$

Thus, the new position of node i is $\vec{x}_i^{\text{new}} = \vec{x}_i + \Delta\vec{x}_i$ . The updated system state is then fed back into the model pipeline, starting from the encode step, allowing for iterative updates. This iterative process ensures that both velocities and positions are adjusted based on the cumulative effects of internal and external forces. By incorporating forward integration bias, the method achieves physically consistent multi-step updates, enabling precise and interpretable modelling of the evolving system dynamics over time.

### 2.3.3. Mesh-particle free modelling of boundaries through reflections

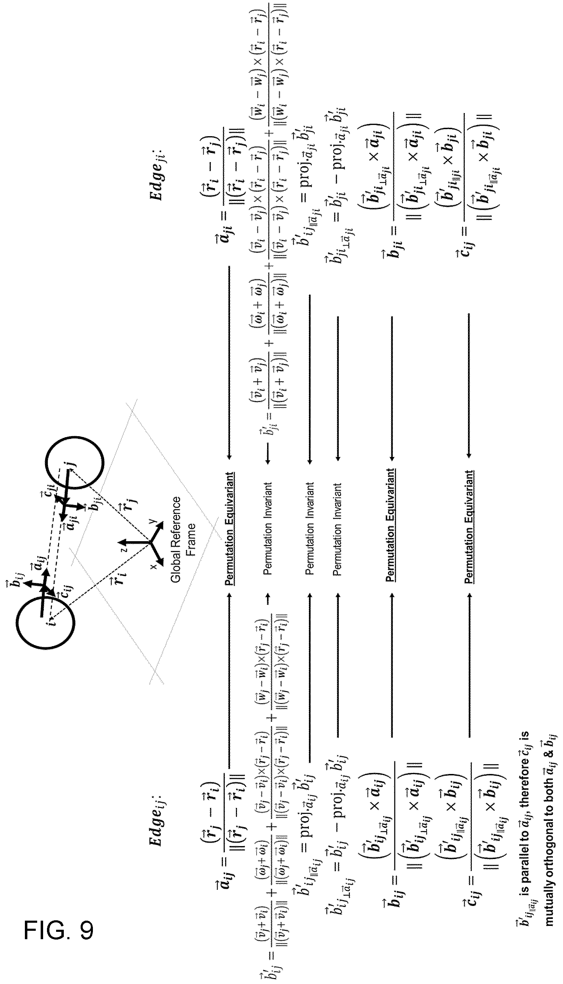

Many dynamical systems involve interactions between components and their boundaries. Such systems are prevalent in various domains, including granular systems, rigid body dynamics (e.g., spheres rolling on a surface), and boundary conditions like Dirichlet or Neumann boundaries in fluid and solid mechanics. One may rely on a mesh-free approach for modelling interactions between a multi-body dynamical system and its boundaries. Preferably, the method does not rely on meshes or densely spaced particles, hence departing from previous approaches. Instead, each boundary is modelled as a reflective surface, where interacting bodies are reflected along the outward normal (see FIG. 9). Boundary interactions are treated similarly to body-body interactions, without requiring any specialized handling.

The reflection process leverages the geometrical properties of the boundary. For example, in the case of a box boundary, reflections are determined using the equations of its wall planes. To establish an interaction, only reflections that meet a threshold distance criterion (for granular dynamical system $\|\vec{r}_i - \vec{r}_j\| \leq 1.2 \times d_i$) are considered as nodes, forming bidirectional edges with the interacting body. Each reflected node inherits the scalar and vector features of the boundary.

This reflection process is recalculated at every time step, ensuring that interactions remain strictly aligned along the normal direction. As demonstrated for granular spheres, the present methods exhibit robust generalization to moving boundaries, even when trained solely on stationary boundary conditions. This adaptability is achieved by treating boundary interactions in the same manner as body-body interactions, utilizing shared edge and node modelling functions. Consequently, the model is both robust and versatile, making it well-suited for complex physical simulations where dynamic boundary conditions and interaction dynamics are crucial.

### 3. Technical implementation details

Various aspects of the present disclosure are described by narrative text, flowcharts, block diagrams of computer systems and/or block diagrams of the machine logic included in computer program product (CPP) embodiments. With respect to any flowcharts, depending upon the technology involved, the operations can be performed in a different order than what is shown in a given flowchart. For example, again depending upon the technology involved, two operations shown in successive flowchart blocks may be performed in reverse order, as a single integrated step, concurrently, or in a manner at least partially overlapping in time.

A computer program product embodiment (CPP embodiment or CPP) is a term used in the present disclosure to describe any set of one, or more, storage media (also called mediums) collectively included in a set of one, or more, storage devices that collectively include machine readable code corresponding to instructions and/or data for performing computer operations specified in a given CPP claim. A storage device is any tangible device that can retain and store instructions for use by a computer processor. Without limitation, the computer readable storage medium may be an electronic storage medium, a magnetic storage medium, an optical storage medium, an electromagnetic storage medium, a semiconductor storage medium, a mechanical storage medium, or any suitable combination of the foregoing. Some known types of storage devices that include these mediums include: diskette, hard disk, random access memory (RAM), read-only memory (ROM), erasable programmable read-only memory (EPROM or Flash memory), static random-access memory (SRAM), compact disc read-only memory (CD-ROM), digital versatile disk (DVD), memory stick, or any suitable combination of the foregoing. A computer readable storage medium is not to be construed as storage in the form of transitory signals per se, such as radio waves or other freely propagating electromagnetic waves, electromagnetic waves propagating through a waveguide, light pulses passing through a fibre optic cable, electrical signals communicated through a wire, and/or other transmission media. As will be understood by those of skill in the art, data is typically moved at some occasional points in time during normal operations of a storage device, such as during access, defragmentation, or garbage collection, but this does not render the storage device as transitory because the data is not transitory while it is stored.

Computing environment 100 (FIG. 11) contains an example of an environment for the execution of at least some of the computer code involved in performing the present methods, such as training and iteratively executing a GNN, determining properties of the underlying system 10, and possibly taking action on it (block 200). In addition to block 200, computing environment 100 includes, for example, computer 101, wide area network (WAN) 102, end user device (EUD) 103, remote server 104, public cloud 105, and private cloud 106. In this embodiment, computer 101 includes processor set 110 (including processing circuitry 120 and cache 121), communication fabric 111, volatile memory 112, persistent storage 113 (including operating system 122 and block 200, as identified above), peripheral device set 114 (including user interface (UI) device set 123, storage 124, and Internet of Things (IoT) sensor set 125), and network module 115. Remote server 104 includes remote database 130. Public cloud 105 includes gateway 140, cloud orchestration module 141, host physical machine set 142, virtual machine set 143, and container set 144.

COMPUTER 101 may take the form of a desktop computer, laptop computer, tablet computer, smart phone, smart watch or other wearable computer, mainframe computer, quantum computer or any other form of computer or mobile device now known or to be developed that is capable of running a program, accessing a network or querying a database, such as remote database 130. As is well understood in the art of computer technology, and depending upon the technology, performance of a computer-implemented method may be distributed among multiple computers and/or between multiple locations. On the other hand, in this presentation of computing environment 100, detailed discussion is focused on a single computer, specifically computer 101, to keep the presentation as simple as possible. However, Computer 101 is likely to communicate with other, similar computers, in order to perform steps according to the present methods. In particular, Computer 101 may be located in a cloud, even though it is not shown in a cloud in FIG. 11. On the other hand, computer 101 is not required to be in a cloud except to any extent as may be affirmatively indicated.

PROCESSOR SET 110 includes one, or more, computer processors of any type now known or to be developed. Processing circuitry 120 may be distributed over multiple packages, for example, multiple, coordinated integrated circuit chips. Processing circuitry 120 may implement multiple processor threads and/or multiple processor cores. Cache 121 is memory that is located in the processor chip package(s) and is typically used for data or code that should be available for rapid access by the threads or cores running on processor set 110. Cache memories are typically organized into multiple levels depending upon relative proximity to the processing circuitry. Alternatively, some, or all, of the cache for the processor set may be located off chip.

Computer readable program instructions are typically loaded onto computer 101 to cause a series of operational steps to be performed by processor set 110 of computer 101 and thereby effect a computer-implemented method, such that the instructions thus executed will instantiate the methods specified in FIGS. 4 - 7 and 12, and/or narrative descriptions of computer-implemented methods included in this document (collectively referred to as the present methods). These computer readable program instructions are stored in various types of computer readable storage media, such as cache 121 and the other storage media discussed below. The program instructions, and associated data, are accessed by processor set 110 to control and direct performance of the present methods. In computing environment 100, at least some of the instructions for performing the present methods may be stored in block 200 in persistent storage 113. COMMUNICATION FABRIC 111 is the signal conduction path that allows the various components of computer 101 to communicate with each other. Typically, this fabric is made of switches and electrically conductive paths, such as the switches and electrically conductive paths that make up buses, bridges, physical input / output ports and the like. Other types of signal communication paths may be used, such as fibre optic communication paths and/or wireless communication paths.

VOLATILE MEMORY 112 is any type of volatile memory now known or to be developed. Examples include dynamic type random access memory (RAM) or static type RAM. Typically, volatile memory 112 is characterized by random access, but this is not required unless affirmatively indicated. In computer 101, the volatile memory 112 is located in a single package and is internal to computer 101, but, alternatively or additionally, the volatile memory may be distributed over multiple packages and/or located externally with respect to computer 101.

PERSISTENT STORAGE 113 is any form of non-volatile storage for computers that is now known or to be developed. The non-volatility of this storage means that the stored data is maintained regardless of whether power is being supplied to computer 101 and/or directly to persistent storage 113. Persistent storage 113 may be a read only memory (ROM), but typically at least a portion of the persistent storage allows writing of data, deletion of data and re-writing of data. Some familiar forms of persistent storage include magnetic disks and solid-state storage devices. Operating system 122 may take several forms, such as various known proprietary operating systems or open-source Portable Operating System Interface-type operating systems that employ a kernel. The code included in block 200 typically includes at least some of the computer code involved in performing the present methods.

PERIPHERAL DEVICE SET 114 includes the set of peripheral devices of computer 101. Data communication connections between the peripheral devices and the other components of computer 101 may be implemented in various ways, such as Bluetooth connections, Near-Field Communication (NFC) connections, connections made by cables (such as universal serial bus (USB) type cables), insertion-type connections (for example, secure digital (SD) card), connections made through local area communication networks and even connections made through wide area networks such as the internet. In various embodiments, UI device set 123 may include components such as a display screen, speaker, microphone, wearable devices (such as goggles and smart watches), keyboard, mouse, printer, touchpad, game controllers, and haptic devices. Storage 124 is external storage, such as an external hard drive, or insertable storage, such as an SD card. Storage 124 may be persistent and/or volatile. In some embodiments, storage 124 may take the form of a quantum computing storage device for storing data in the form of qubits. In embodiments where computer 101 is required to have a large amount of storage (for example, where computer 101 locally stores and manages a large database) then this storage may be provided by peripheral storage devices designed for storing very large amounts of data, such as a storage area network (SAN) that is shared by multiple, geographically distributed computers. IoT sensor set 125 is made up of sensors, e.g., cameras.

NETWORK MODULE 115 is the collection of computer software, hardware, and firmware that allows computer 101 to communicate with other computers through WAN 102. Network module 115 may include hardware, such as modems or Wi-Fi signal transceivers, software for packetizing and/or de-packetizing data for communication network transmission, and/or web browser software for communicating data over the internet. In some embodiments, network control functions and network forwarding functions of network module 115 are performed on the same physical hardware device. In other embodiments (for example, embodiments that utilize software-defined networking (SDN)), the control functions and the forwarding functions of network module 115 are performed on physically separate devices, such that the control functions manage several different network hardware devices. Computer readable program instructions for performing the present methods can typically be downloaded to computer 101 from an external computer or external storage device through a network adapter card or network interface included in network module 115.

WAN 102 is any wide area network (for example, the internet) capable of communicating computer data over non-local distances by any technology for communicating computer data, now known or to be developed. In some embodiments, the WAN 102 may be replaced and/or supplemented by local area networks (LANs) designed to communicate data between devices located in a local area, such as a Wi-Fi network. The WAN and/or LANs typically include computer hardware such as copper transmission cables, optical transmission fibres, wireless transmission, routers, firewalls, switches, gateway computers and edge servers.

END USER DEVICE (EUD) 103 is any computer system that is used and controlled by an end user (for example, a customer of an enterprise that operates computer 101), and may take any of the forms discussed above in connection with computer 101. EUD 103 typically receives helpful and useful data from the operations of computer 101. For example, in a hypothetical case where computer 101 is designed to provide a recommendation to an end user, this recommendation would typically be communicated from network module 115 of computer 101 through WAN 102 to EUD 103. In this way, EUD 103 can display, or otherwise present, the recommendation to an end user. In some embodiments, EUD 103 may be a client device, such as thin client, heavy client, mainframe computer, desktop computer and so on.

REMOTE SERVER 104 is any computer system that serves at least some data and/or functionality to computer 101. Remote server 104 may be controlled and used by the same entity that operates computer 101. Remote server 104 represents the machine(s) that collect and store helpful and useful data for use by other computers, such as computer 101. For example, in a hypothetical case where computer 101 is designed and programmed to provide a recommendation based on historical data, then this historical data may be provided to computer 101 from remote database 130 of remote server 104.

PUBLIC CLOUD 105 is any computer system available for use by multiple entities that provides on-demand availability of computer system resources and/or other computer capabilities, especially data storage (cloud storage) and computing power, without direct active management by the user. Cloud computing typically leverages sharing of resources to achieve coherence and economies of scale. The direct and active management of the computing resources of public cloud 105 is performed by the computer hardware and/or software of cloud orchestration module 141. The computing resources provided by public cloud 105 are typically implemented by virtual computing environments that run on various computers making up the computers of host physical machine set 142, which is the universe of physical computers in and/or available to public cloud 105. The virtual computing environments (VCEs) typically take the form of virtual machines from virtual machine set 143 and/or containers from container set 144. It is understood that these VCEs may be stored as images and may be transferred among and between the various physical machine hosts, either as images or after instantiation of the VCE. Cloud orchestration module 141 manages the transfer and storage of images, deploys new instantiations of VCEs and manages active instantiations of VCE deployments. Gateway 140 is the collection of computer software, hardware, and firmware that allows public cloud 105 to communicate through WAN 102.

Some further explanation of virtualized computing environments (VCEs) will now be provided. VCEs can be stored as images. A new active instance of the VCE can be instantiated from the image. Two familiar types of VCEs are virtual machines and containers. A container is a VCE that uses operating-system-level virtualization. This refers to an operating system feature in which the kernel allows the existence of multiple isolated user-space instances, called containers. These isolated user-space instances typically behave as real computers from the point of view of programs running in them. A computer program running on an ordinary operating system can utilize all resources of that computer, such as connected devices, files and folders, network shares, CPU power, and quantifiable hardware capabilities. However, programs running inside a container can only use the contents of the container and devices assigned to the container, a feature which is known as containerization.

PRIVATE CLOUD 106 is similar to public cloud 105, except that the computing resources are only available for use by a single enterprise. While private cloud 106 is depicted as being in communication with WAN 102, in other embodiments a private cloud may be disconnected from the internet entirely and only accessible through a local/private network. A hybrid cloud is a composition of multiple clouds of different types (for example, private, community or public cloud types), often respectively implemented by different vendors. Each of the multiple clouds remains a separate and discrete entity, but the larger hybrid cloud architecture is bound together by standardized or proprietary technology that enables orchestration, management, and/or data/application portability between the multiple constituent clouds. In this embodiment, public cloud 105 and private cloud 106 are both part of a larger hybrid cloud.

While the present invention has been described with reference to a limited number of embodiments, variants, and the accompanying drawings, it will be understood by those skilled in the art that various changes may be made, and equivalents may be substituted without departing from the scope of the present invention. In particular, a feature (device-like or method-like) recited in a given embodiment, variant or shown in a drawing may be combined with or replace another feature in another embodiment, variant, or drawing, without departing from the scope of the present invention. Various combinations of the features described in respect of any of the above embodiments or variants may accordingly be contemplated, that remain within the scope of the appended claims. In addition, many minor modifications may be made to adapt a particular situation or material to the teachings of the present invention without departing from its scope. Therefore, it is intended that the present invention is not limited to the particular embodiments disclosed, but that the present invention will include all embodiments falling within the scope of the appended claims. In addition, many other variants than explicitly touched above can be contemplated. For example, other GNN frameworks and other dynamical systems can be contemplated.

**Claims**

1. A computer-implemented method of determining one or more physical properties of a physical system (10*i*, 10*f*, 10) represented by a graph neural network (GNN), wherein the physical system is a multi-body dynamical system of components interacting through pairwise interactions, such as a 3D granular system, the GNN including nodes and bidirectional edges that are mapped onto the components and the pairwise interactions, respectively, wherein the method comprises:

   accessing an initial state obtained (S121) in accordance with initial dynamics of the physical system;
   iteratively executing (S125) the GNN based on the initial state accessed to iteratively update (S1256) a virtual state of the physical system as represented by the GNN, whereby multiple iterations are performed, which respectively correspond to multiple time steps; and
   determining (S126) one or more physical properties of the physical system at one or more of the multiple time steps based on one or more virtual states of the physical system as updated (S1256) at one or more of the corresponding iterations, respectively, wherein, at each iteration of the multiple iterations,
   the virtual state is updated (S1256) through message passing steps, which iteratively update (S1252, S1256) representations of the nodes and the bidirectional edges and enforce (S1255), for each bidirectional edge of the bidirectional edges, a conservation of both a linear momentum and an angular momentum of the pairwise interaction corresponding to said each bidirectional edge, the angular momentum measured about a point of action of internal force of said corresponding pairwise interaction.

2. The computer-implemented method according to claim **1,** wherein said one or more physical properties include

at least one mechanical property of one or more, preferably all, of the components of the physical system, and/or trajectories of at least a subset of the components of the physical system.

3. The computer-implemented method according to claim **1** or **2,** wherein

the physical system is a system operating in the real world, and
the method further comprises, prior to accessing said initial state, performing (S121) one or more measurements of the physical system, and determining (S121) said initial state based on dynamics obtained from the one or more measurements performed.

4. The computer-implemented method according to claim **3,** wherein
at least one property of the one or more physical properties as determined (S126) at one or more of the multiple time steps differs, in its type, from a type of any property as measured by performing (S121) said one or more measurements, whereby said one property is determined for virtual sensing purposes.

5. The computer-implemented method according to claim **3** or **4,** wherein

said one or more physical properties are determined (S126) at several steps of the multiple time steps, preferably at each of the multiple time steps,
the method further comprises monitoring (S127) the one or more physical properties determined at the several steps against one or more criteria, and
most recent time steps of the several steps preferably anticipate a future of the physical system operating in the real world, whereby the one or more physical properties determined are predictively monitored.

6. The computer-implemented method according to claim **4** or **5,** wherein the method further comprises
taking (S128 - S129) action with respect to the physical system (10) as the latter operates in the real word, based on the one or more properties monitored, to change a way the physical system currently operates in the real world.

7. The computer-implemented method according to any one of claims **1** to **6,** wherein

different instances of the GNN are iteratively executed (S125) based on distinct initial states, the latter obtained (S121) in accordance with different initial dynamics of the physical system, so as to determine the one or more physical properties for each of multiple evolutive scenarios of the physical system, and
said different instances of the GNN are preferably executed (S125) concomitantly, in parallel.

8. The computer-implemented method according to any one of claims **1** to **7,** wherein, at each iteration of the multiple iterations,
said message passing steps are performed to iteratively update (S1252, S1256) said representations in parallel for all directional edges of said bidirectional edges, so as enforce (S1255) the conservation of both the linear momentum and the angular momentum for said each bidirectional edge of the bidirectional edges.

9. The computer-implemented method according to any one of claims **1** to **8,** wherein
said representations are obtained by projecting vector properties of the nodes and directional edges of the bidirectional edges onto edge-aligned reference frames, the latter precomputed as special orthogonal group SO(3)-equivariant, translational group T(3)-invariant, and permutation-equivariant, reference frames, whereby said representations are obtained as special orthogonal group SO(3)-invariant, translational group T(3)-invariant, and permutation-invariant, embeddings.

10. The computer-implemented method according to claim **9,** wherein said each iteration (S125) comprises, for each directional edge of said each bidirectional edge,

encoding (S1251) vector properties of said each directional edge and the two corresponding nodes to form latent embeddings,

obtaining (S1252) edge interaction embeddings from the latent embeddings, updating (S1254), thanks to a learned function, the edge interaction embeddings based on previous edge interaction embeddings as obtained at one or more preceding ones of the iterations,

decoding (S1255) dynamics of said two corresponding nodes from the updated edge interaction embeddings, so as to enforce the conservation of the linear momentum and the angular momentum, and

updating (S1256) states of said two corresponding nodes from the decoded dynamics, whereby a virtual state of the system as represented by the GNN is eventually obtained based on states as updated for all of the nodes of the GNN, the states of said two corresponding nodes being preferably updated by performing a single step Euler integration.

11. The computer-implemented method according to claim **10,** wherein said properties are encoded (S1251) for said each directional edge, by

projecting the vector properties of said two corresponding nodes onto the edge-aligned reference frame corresponding to said each directional edge, to obtain first scalars, and

projecting the properties of said each directional edge onto the same edge-aligned reference frame to obtain second scalars, whereby the latent embeddings are obtained by applying learned functions to the first scalars and the second scalars.

12. The computer-implemented method according to claim **10** or **11,** wherein decoding (S1255) said dynamics further comprises, for said each directional edge,

aggregating internal forces and rotational moments at each of said two corresponding nodes, and

decoding velocity changes and angular velocity changes.

13. The computer-implemented method according any one of claims **1** to **12,** wherein the method further comprises, prior to accessing said initial state and iteratively executing the GNN, training functions involved in the GNN by introducing inductive biases in an architecture of the GNN for it to learn to enforce, for any bidirectional edge thereof, a conservation of both the linear momentum and the angular momentum upon decoding dynamics of the two nodes corresponding to said any bidirectional edge.

14. A characterization system (1000), wherein

the characterization system (1000) comprises processing means (110) configured to perform steps of a method of determining one or more physical properties of a physical system according to any one of claims **1** to **13,** and

the computerized system (100) preferably comprises one or more of:

the physical system (10),

characterization means (200), which are interfaced with the processing means (110); and

a transducer (300) configured to influence the physical system, the transducer interfaced with the processing means (110), whereby the transducer is adapted to take action with respect to the physical system (10).

15. A computer program product comprising a computer readable storage medium having program instructions embodied therewith, the program instructions executable by processing means of a computerized system to cause the latter to perform steps of a method according to any one of claims **1** to **13.**

**2(a)**

$$\vec{\omega}_i \quad \vec{v}_i$$

$$\vec{v}_j \quad \vec{\omega}_j$$

$m_i, I_i$
**Body** $i$

$\vec{r}_i \quad \vec{r}_j$

$m_j, I_j$
**Body** $j$

State of System at
interaction

**1(a)**

10i

A 6 DOF
multi-body
dynamical
system

**1(b)**

Graph
Representation
(bi-directional
edges)

- Node Vector
  features : $\vec{v}_i, \vec{\omega}_i$
- Node Scalar
  features: $\alpha_i$
- Edge $ij$:
  Sender= $j$,
  Receiver = $i$

**2(b)**

$$\vec{v}_i, \vec{\omega}_i \qquad \vec{b}_{ji} \qquad \vec{v}_j, \vec{\omega}_j$$
$$\alpha_i \qquad \vec{a}_{ji} |\Delta x_{ji}| \ \vec{c}_{ij} \qquad \alpha_j$$
**Node** $i$ $\qquad \vec{c}_{ji} |\Delta x_{ij}| \ \vec{a}_{ij}$ $\qquad$ **Node** $j$
$$\vec{b}_{ij}$$
$$\vec{r}_i \quad \vec{r}_j$$

Edge SE(3) & Permutation
Equivariant reference frame

**Scalar Node
Embedding**

$h_i$ ●

$$\epsilon_{ij} = \epsilon_{ji}$$

$h_j$

SE(3) & permutation
Invariant edge
interaction embedding

FIG. 1

**Conservation of Linear Momentum**

3(a)  **Physics of Interaction**

Conservation of linear momentum

$$\rightarrow \vec{F}_{ij} = -\vec{F}_{ji}$$

3(b)  **Integration in Model architecture**

$$\vec{F}_{ij} = f_1 * \vec{a}_{ij} + f_2 * \vec{b}_{ij} + f_3 * \vec{c}_{ij}$$

$$\vec{F}_{ji} = f_1 * \vec{a}_{ji} + f_2 * \vec{b}_{ji} + f_3 * \vec{c}_{ji}$$

$$\epsilon_{ij} = \epsilon_{ji}$$

**Decode internal force vector at edge:**
Decoded *permutation invariant coefficients*
$(f_1, f_2, f_3)$ of basis vectors
×
*Permutation Equivariant basis vectors* :

$$\rightarrow \vec{F}_{ij} = -\vec{F}_{ji}$$

FIG. 2

FIG. 3

FIG. 4

S1252

**(2)**

$$\epsilon_{ij} = \theta_e \left( \epsilon_{ij}^{sender} + \epsilon_{ij}^{edge} + \epsilon_{ij}^{receiver} + h_i + h_j \right)$$

S1254

$$\epsilon_{ij}' = \theta_{LN}(\epsilon_{ij} + \epsilon_{ij}^{L-1})$$

Processing of node and edge embeddings to generate edge interaction embeddings

Edge embedding updated from previous step's embedding

**PROCESS THE EDGE INTERACTION**

FIG. 5

S1255

**DECODE**

FIG. 6

$$\Delta\vec{x}_i = \frac{(\vec{v}_i + (\vec{v}_i + \Delta\vec{v}_i))}{2}\Delta t$$

$$\Delta\vec{x}_j = \frac{(\vec{v}_j + (\vec{v}_j + \Delta\vec{v}_j))}{2}\Delta t$$

Updated node states by Single step Euler integration

**UPDATE**

S1256

**Updated System state after M message Passing steps**

FIG. 7

**(a)**

Wall outward Normal

*BOX BOUNDARY:*

$Wall\ Normals: A_k x + B_k y + C_k z + d_k = 0$ where, $k \in \{1, 2, 3\ \&\ 4\}$

**(b)**

*CYLINDER BOUNDARY:*

$Axis: \vec{V}_{axis}, Height: H, Diameter: D$

Granular Sphere

Reflected Sphere

Outward wall normal

Edge (d<=threshold)

# FIG. 8

FIG. 9

Global Reference Frame

$Edge_{ij}$:

$$\vec{a}_{ij} = \frac{(\vec{r}_j - \vec{r}_i)}{\|(\vec{r}_j - \vec{r}_i)\|}$$

Permutation Equivariant

$$\vec{b}'_{ij} = \frac{(\vec{v}_j + \vec{v}_i)}{\|(\vec{v}_j + \vec{v}_i)\|} + \frac{(\vec{\omega}_j + \vec{\omega}_i)}{\|(\vec{\omega}_j + \vec{\omega}_i)\|} + \frac{(\vec{v}_j - \vec{v}_i)\times(\vec{r}_j - \vec{r}_i)}{\|(\vec{v}_j - \vec{v}_i)\times(\vec{r}_j - \vec{r}_i)\|} + \frac{(\vec{w}_j - \vec{w}_i)\times(\vec{r}_j - \vec{r}_i)}{\|(\vec{w}_j - \vec{w}_i)\times(\vec{r}_j - \vec{r}_i)\|}$$

Permutation Invariant

$$\vec{b}'_{ij_{\|\vec{a}_{ij}}} = \mathrm{proj.}_{\vec{a}_{ij}}\, \vec{b}'_{ij}$$

Permutation Invariant

$$\vec{b}'_{ij_{\perp\vec{a}_{ij}}} = \vec{b}'_{ij} - \mathrm{proj.}_{\vec{a}_{ij}}\, \vec{b}'_{ij}$$

Permutation Invariant

$$\vec{b}_{ij} = \frac{\left(\vec{b}'_{ij_{\perp\vec{a}_{ij}}} \times \vec{a}_{ij}\right)}{\left\| \left(\vec{b}'_{ij_{\perp\vec{a}_{ij}}} \times \vec{a}_{ij}\right) \right\|}$$

Permutation Equivariant

$$\vec{c}_{ij} = \frac{\left(\vec{b}'_{ij_{\|\vec{a}_{ij}}} \times \vec{b}_{ij}\right)}{\left\| \left(\vec{b}'_{ij_{\|\vec{a}_{ij}}} \times \vec{b}_{ij}\right) \right\|}$$

Permutation Equivariant

$\vec{b}'_{ij_{\|\vec{a}_{ij}}}$ is parallel to $\vec{a}_{ij}$, therefore $\vec{c}_{ij}$ is mutually orthogonal to both $\vec{a}_{ij}$ & $\vec{b}_{ij}$

$Edge_{ji}$:

$$\vec{a}_{ji} = \frac{(\vec{r}_i - \vec{r}_j)}{\|(\vec{r}_i - \vec{r}_j)\|}$$

$$\vec{b}'_{ji} = \frac{(\vec{v}_i + \vec{v}_j)}{\|(\vec{v}_i + \vec{v}_j)\|} + \frac{(\vec{\omega}_i + \vec{\omega}_j)}{\|(\vec{\omega}_i + \vec{\omega}_j)\|} + \frac{(\vec{v}_i - \vec{v}_j)\times(\vec{r}_i - \vec{r}_j)}{\|(\vec{v}_i - \vec{v}_j)\times(\vec{r}_i - \vec{r}_j)\|} + \frac{(\vec{w}_i - \vec{w}_j)\times(\vec{r}_i - \vec{r}_j)}{\|(\vec{w}_i - \vec{w}_j)\times(\vec{r}_i - \vec{r}_j)\|}$$

$$\vec{b}'_{ij_{\|\vec{a}_{ji}}} = \mathrm{proj.}_{\vec{a}_{ji}}\, \vec{b}'_{ji}$$

$$\vec{b}'_{ji_{\perp\vec{a}_{ji}}} = \vec{b}'_{ji} - \mathrm{proj.}_{\vec{a}_{ji}}\, \vec{b}'_{ji}$$

$$\vec{b}_{ji} = \frac{\left(\vec{b}'_{ji_{\perp\vec{a}_{ji}}} \times \vec{a}_{ji}\right)}{\left\| \left(\vec{b}'_{ji_{\perp\vec{a}_{ji}}} \times \vec{a}_{ji}\right) \right\|}$$

$$\vec{c}_{ij} = \frac{\left(\vec{b}'_{ji_{\|ji}} \times \vec{b}_{ji}\right)}{\left\| \left(\vec{b}'_{ji_{\|\vec{a}_{ji}}} \times \vec{b}_{ji}\right) \right\|}$$

FIG. 10

100 ⌐

COMPUTER 101

PROCESSOR SET 110

PROCESSING CIRCUITRY 120        CACHE 121

COMMUNICATION FABRIC 111

VOLATILE MEMORY 112

PERSISTENT STORAGE 113

OPERATING SYSTEM 122

GNN TRAINING AND EXECUTION MODULES, MONITORING MODULE, CONTROL MODULE
200

PERIPHERAL DEVICE SET 114

UI DEVICE SET 123        STORAGE 124        OTHER STORAGE 125

NETWORK MODULE 115

WAN 102

END USER DEVICE 103

REMOTE SERVER 104

REMOTE DATABASE 130

PRIVATE CLOUD 106

GATEWAY 140                                PUBLIC CLOUD 105

CLOUD ORCHESTRATION MODULE 141        HOST PHYSICAL MACHINE SET 142

VIRTUAL MACHINE SET 143        CONTAINER SET 144

FIG. 11

S120: Train GNN by introducing
biases for momenta conservation

Runtime (inference and monitoring)

S121: Characterize trajectory of physical system
and build initial state of physical system

Initial state

S122: Map GNN onto physical system
and build reference frames

S123: Monitoring

S124: Start GNN execution

S125: Single GNN Iteration
(multiple message passing steps)

S1251: Encode properties of edges and nodes
to form latent embeddings

S1252: Obtain edge interaction embeddings

S1253: Update edge interaction
embeddings history

Edge interaction
embeddings history

S1254: Update edge interaction embeddings

S1255: Decode node dynamics and enforce pairwise
conservation of linear & angular momenta through biases

S1256: Updating virtual system state
by updating node states

S126: Compute properties of
physical system

S127: Anomaly?

No

Yes

S128: Signal transducer

S129: Take action on physical system

FIG. 12

| | Europäisches Patentamt European Patent Office Office européen des brevets | **EUROPEAN SEARCH REPORT** | **Application Number** EP 24 22 0892 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Han Jiaqi ET AL: "Equivariant Graph Hierarchy-Based Neural Networks", , 9 December 2022 (2022-12-09), pages 1-12, XP093271198, Retrieved from the Internet: URL:https://proceedings.neurips.cc/paper_files/paper/2022/file/3bdeb28a531f7af94b56bcdf8ee88f17-Paper-Conference.pdf * abstract * * Section 2 * * Section 3 * * Section 4.1 * ----- | 1-15 | INV. G06F16/901 G06F16/906 G06N3/00 |
| X | Xu Minkai ET AL: "Equivariant Graph Neural Operator for Modeling 3D Dynamics", , 2 June 2024 (2024-06-02), pages 1-18, XP093271195, Retrieved from the Internet: URL:https://cs.stanford.edu/~jure/pubs/equivariant-icml24.pdf * abstract * * Section 1 * * Section 2.1 * * Section 5.1 * ----- -/-- | 1-15 | TECHNICAL FIELDS SEARCHED (IPC) G06F G06N |

The present search report has been drawn up for all claims

| Place of search | Date of completion of the search | Examiner |
|---|---|---|
| Berlin | 22 April 2025 | Pose Rodríguez, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

page 1 of 2

Europäisches
Patentamt

European
Patent Office

Office européen
des brevets

## EUROPEAN SEARCH REPORT

**Application Number**

EP 24 22 0892

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Du Weitao ET AL: "SE(3) Equivariant Graph Neural Networks with Complete Local Frames", <br><br> , <br> 6 July 2022 (2022-07-06), pages 1-26, XP093271200, <br> Retrieved from the Internet: <br> URL:https://arxiv.org/pdf/2110.14811 <br> * abstract * <br> * Section 1 * <br> * Section 4 * <br> * Section 7.1 * <br> * figure 2 * <br> ----- | 1-15 | |
| T | Sharma Vinay ET AL: "Dynami-CAL GraphNet: A Physics-Informed Graph Neural Network Conserving Linear and Angular Momentum for Dynamical Systems", <br><br> , <br> 13 January 2025 (2025-01-13), pages 1-31, XP093271205, <br> Retrieved from the Internet: <br> URL:https://arxiv.org/pdf/2501.07373 <br> * the whole document * <br> ----- | 1-15 | TECHNICAL FIELDS SEARCHED (IPC) |

The present search report has been drawn up for all claims

| Place of search | Date of completion of the search | Examiner |
|---|---|---|
| Berlin | 22 April 2025 | Pose Rodríguez, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
........................................................................
& : member of the same patent family, corresponding document

EPO FORM 1503 03.82 (P04C01)

page 2 of 2